# EUROPÄISCHE PATENTSCHRIFT

(11) **EP 2 741 837 B1**
(45) Veröffentlichungstag und Bekanntmachung des Hinweises auf die Patenterteilung: **23.08.2017**
(21) Anmeldenummer: 12735478.5
(22) Anmeldetag: 14.06.2012
(51) Int. Cl.: B01D 35/147, B01D 35/153, B01D 35/16

(54) **FLÜSSIGKEITSFILTER MIT ABLASSVENTIL**
LIQUID FILTER HAVING A DRAINAGE VALVE
FILTRE POUR LIQUIDE COMPORTANT UNE VANNE D'ÉVACUATION

(30) Priorität: 08.08.2011 DE 102011080617
(43) Veröffentlichungstag der Anmeldung: 18.06.2014
(73) Patentinhaber: Hengst SE & Co. KG, 48147 Münster (DE)
(72) Erfinder: ARDES, Wilhelm, 59387 Ascheberg (DE)
(74) Vertreter: Linnemann, Winfried
(86) Internationale Anmeldenummer: PCT/EP2012/061247
(87) Internationale Veröffentlichungsnummer: WO 2013/020742

(56) Entgegenhaltungen:
- DE-U1-202007 006 385
- US-B1- 6 569 326

## Beschreibung

Die Erfindung betrifft einen Flüssigkeitsfilter, insbesondere Öl- oder Kraftstofffilter einer Brennkraftmaschine, nach dem Oberbegriff des Anspruchs 1.

Ein Flüssigkeitsfilter der vorstehend angegebenen Art ist aus DE 100 38 531 A1 bekannt. Dieses Dokument zeigt einen Flüssigkeitsfilter, insbesondere für Schmieröl einer Brennkraftmaschine, aufweisend ein Filtergehäuse, ein Filterelement, einen Stützkörper und ein Schiebeventil, wobei das Filtergehäuse über einen Rohflüssigkeitszulauf, einen Reinflüssigkeitsablauf und einen Flüssigkeitsablasskanal verfügt, wobei das Filtergehäuse einen Gehäusekörper und einen Gehäusedeckel aufweist, welche lösbar und dichtend miteinander verbunden sind, wobei das Filterelement derart in das Filtergehäuse eingebracht ist, dass eine Rohseite dichtend von einer Reinseite getrennt ist, wobei das Filterelement einen Filterinnenraum umschließt, in welchem der Stützkörper angeordnet ist, und wobei der Flüssigkeitsablasskanal von dem Schiebeventil öffenbar verschlossen ist. Wesentlich ist hier, dass das Schiebeventil lösbar mit dem Stützkörper oder alternativ über ein Verbindungsstück mit dem Deckel verbunden ist. Das Schiebeventil kann über einen Zentrierbereich verfügen, welcher in dem Gehäusekörper geführt ist. Dabei kann der Zentrierbereich derart in dem Gehäusekörper geführt sein, dass das Schiebeventil beim Filterwechsel durch eine Klemmkraft gehalten ist, wodurch eine das Schiebeventil in Öffnungsrichtung beaufschlagende Feder entbehrlich wird.

Als nachteilig wird bei diesem bekannten Flüssigkeitsfilter angesehen, dass insbesondere bei der Fertigung des Zentrierbereichs einerseits und des den Zentrierbereich führenden Teils des Gehäusekörpers andererseits eine hohe Genauigkeit mit sehr engen Fertigungstoleranzen erforderlich ist, damit sich diese beiden Teile in jedem Falle mit ausreichend hohen Reibungskräfte, die zum Halten des Schiebeventils in Öffnungsstellung nötig sind, aber gleichzeitig mit nicht zu hohen Reibungskräften, die ein vorzeitiges Trennen des Schiebeventils vom Stützkörper oder Verbindungsstück verursachen würden, relativ zueinander bewegen können. Hinzu kommt erschwerend, dass der ständig unter Spannung stehende Zentrierbereich mit der Zeit einer Relaxation und aufgrund seiner Reibung im Gehäusekörper einem Verschleiß unterliegt, was die Reibungskräfte beeinflusst und insbesondere im Laufe der Einsatzzeit geringer werden lässt. Zudem neigen die in diesem bekannten Flüssigkeitsfilter verwendeten O-Ringdichtungen am Schiebeventil zu einem Kleben an der Wandung des Gehäusekörpers, was das Lösen des Schiebeventils aus seiner Schließstellung erschwert und was ebenfalls zu einem ungewollten, vorzeitigen Trennen des Schiebeventils vom Stützkörper oder Verbindungsstück führen kann.

Für die vorliegende Erfindung stellt sich daher die Aufgabe, Flüssigkeitsfilter der eingangs genannten Art zu schaffen, die die angeführten Nachteile vermeiden und die bei einfacher Konstruktion eine zuverlässige und dauerhaft sichere Funktion gewährleisten.

Die Lösung der gestellten Aufgabe gelingt erfindungsgemäß mit einem Flüssigkeitsfilter nach dem Oberbegriff des Patentanspruchs 1, welcher dadurch gekennzeichnet ist, dass das Halteelement durch wenigstens ein Federelement gebildet ist, welches in Öffnungsstellung des Ventilkörpers durch seine Federkraft selbsttätig ausfedert und den Ventilkörper in seiner Öffnungsstellung haltend in Anlage an eine Federelementauflage gelangt und welches durch Ausüben einer Kraft eingefedert und so ein Verschieben des Ventilkörpers in Schließrichtung freigebend außer Eingriff mit der Federelementauflage gebracht wird.

Mit der Erfindung wird vorteilhaft ein Flüssigkeitsfilter geschaffen, bei dem das Halteelement seine gewünschte Funktion hinsichtlich des Ventilkörpers dauerhaft sicher und zuverlässig ausführt. Diese dauerhafte Sicherheit und Zuverlässigkeit bleibt auch bestehen, wenn das das Halteelement bildende Federelement im Laufe einer längeren Einsatzzeit einer gewissen Relaxation unterliegt, weil das Federelement nicht mit einer mit Reibung verbundenen Klemmwirkung arbeitet, sondern mittels Anlage an der zugehörigen Federelementauflage. Für die Anlage des Filterelements an der zugehörigen Federelementauflage sind gewisse Maßtoleranzen oder zeitliche Maßveränderungen ohne Auswirkungen auf die Funktion. Eine den Ventilkörper in Öffnungsrichtung beaufschlagende Feder wird auch bei dem erfindungsgemäßen Flüssigkeitsfilter vorteilhaft nicht benötigt.

In einer bevorzugten Weiterbildung des Flüssigkeitsfilters ist vorgesehen, dass die das Halteelement einfedernde Kraft durch Ausüben einer axialen Schubkraft auf den Filtereinsatz oder auf den Ventilkörper in dessen Schließrichtung erzeugbar ist. In dieser Ausführung wird das Ausüben der für das Einfedern des Halteelementes nötigen Kraft besonders einfach, weil auf den Filtereinsatz oder auf den Ventilkörper beim Zusammenbauen des Flüssigkeitsfilters mit dem abschließenden Anbringen des Deckels des Filtergehäuses ohnehin eine solche Schubkraft ausgeübt wird. Eine besondere Kraftausübung in einem eigenen Montageschritt ist somit vorteilhaft nicht erforderlich.

Weiter schlägt die Erfindung vor, dass das Federelement Teil des Ventilkörpers oder mit diesem verbunden ist und dass die Federelementauflage als Teil des Filtergehäuses oder als mit dem Filtergehäuse verbundenes Teil im Ablasskanal angeordnet ist. Hiermit wird insbesondere der Vorteile erreicht, dass in dem Fall einer Beschädigung des Federelementes nur der Ventilkörper ausgetauscht oder mit einem neuen Federelement verbunden werden muss, um die Funktionsfähigkeit wieder herzustellen. Die Federelementauflage unterliegt als unbewegliches Bauelement keinem Verschleiß und muss deshalb auch nicht auswechselbar ausgeführt werden.

In einer bevorzugten Weiterbildung ist das Federelement durch ein oder mehrere in Axialrichtung des Ventilkörpers von dessen unterem Ende ausgehende Federzungen gebildet, die an ihrer Außenseite zumindest je einen Haltenocken aufweisen, und ist die Federelementauflage durch die Oberseite einer ringförmigen Verengung des Ablasskanals, durch welche die Federzungen verlaufen, gebildet. In dieser Ausgestaltung ist das Federelement einerseits sehr einfach in seiner Formgebung und andererseits sehr zuverlässig in seiner Funktion. Bevorzugt sind die Federzungen dabei einstückig mit dem übrigen Ventilkörper ausgeführt, was eine besonders einfache und kostengünstige Fertigung erlaubt. Der Ventilkörper besteht dazu beispielsweise aus einem Spritzgussteil aus einem elastischen-flexiblen Kunststoff.

Eine besonders einfache geometrische Gestaltung ergibt sich weiterhin, wenn, wie bevorzugt vorgesehen ist, die ringförmige Verengung des Ablasskanals zugleich den Ventilsitz des Ablassventils bildet.

Vorteilhaft kann der Ventilkörper axial dichtend mit dem Ventilsitz im Ablasskanal zusammenwirken, was eine unerwünscht hohe Reibung zwischen Ventilkörper und Ablasskanal sicher ausschließt.

In einer Weiterbildung des Flüssigkeitsfilters ist vorgesehen, dass die Federzungen in einem axialen Abstand von den Haltenocken zu ihrem freien Ende hin außenseitig je einen weiteren, widerhakenförmigen Vorsprung aufweisen, wobei der axiale Bewegungsweg des Ventilkörpers in Öffnungsrichtung durch Anlaufen der Vorsprünge an die Unterseite der ringförmigen Verengung begrenzt ist. Hiermit erhalten die Federzungen im Zusammenwirken mit der Verengung die zusätzliche Funktion eines Anschlages für die Bewegung des Ventilkörpers in Öffnungsrichtung.

Bei dem erfindungsgemäßen Flüssigkeitsfilter kann das Federelement statt durch Federzungen alternativ durch eine Ringfeder gebildet sein, die in einer quer zur Axialrichtung des Ventilkörpers liegenden Ebene angeordnet und in dieser Ebene verformbar ist, wobei die Ringfeder in Öffnungsstellung des Ventilkörpers unbelastet ist und ihren größten Durchmesser aufweist und auf der Federelementauflage aufliegt und wobei durch mindestens ein unmittelbar oder mittelbar mit dem Deckel verbundenes, eine Kraft auf die Ringfeder ausübendes Umformelement die Ringfeder beim Anbringen des Deckels am Gehäuse in ihrem Durchmesser so weit verkleinerbar ist, dass die Ringfeder radial nach innen hin außer Anlage von der Federelementauflage gelangt und relativ zu dieser zusammen mit dem Ventilkörper im Ablasskanal in Schließrichtung verschoben werden kann. Auch mit dem durch die Ringfeder gebildeten Federelement wird die gewünschte Funktion des Haltens des Ventilkörpers in seiner Öffnungsstellung nach dem Trennen vom Filtereinsatz oder Deckel sicher und dauerhaft gewährleistet.

Bevorzugt hat dabei die das Federelement bildende Ringfeder in Draufsicht einen rautenförmigen Verlauf, wobei im entspannten Zustand die Ringfeder mit zwei äußeren, einander gegenüberliegende Rautenecken auf der Federelementauflage aufliegt und wobei das Umformelement zwei axial verlaufende Arme aufweist, die beim Anbringen des Deckels am Gehäuse mit den zwei anderen, inneren Rautenecken von innen her nach außen hin aufweitend und dadurch die zwei äußeren Rautenecken nach innen bewegend mit der Ringfeder in Eingriff treten. Das Umformelement ist hier ein einfaches Bauteil, das problemlos mit der nötigen mechanischen Stabilität ausgeführt werden kann, die für das Umformen der Ringfeder erforderlich ist. Selbstverständlich kann die Ringfeder auch eine andere, technisch äquivalente Umrissform aufweisen, beispielsweise ein Oval oder eine Ellipse oder ein Sechseck oder Achteck, wobei nur gewährleistet sein muss, dass durch ein angepasst ausgeführtes Umformelement die Ringfeder so umgeformt werden kann, dass sich ihr Durchmesser in den mit der Federelementauflage zusammenwirkenden Bereichen ausreichend verkleinert.

Um auch hierbei die Konstruktion einfach zu halten, ist bevorzugt das Umformelement mit dem Filtereinsatz oder dem Deckel einstückig oder fest verbunden.

Auch bei den Ausführungen des Flüssigkeitsfilters mit der Ringfeder kann der Ventilkörper ein oder mehrere in seiner Axialrichtung von seinem unteren Ende ausgehende Federzungen aufweisen, die außenseitig je einen widerhakenförmigen Vorsprung aufweisen, wobei der axiale Bewegungsweg des Ventilkörpers in Öffnungsrichtung durch Anlaufen der Vorsprünge an die Unterseite einer ringförmigen Verengung im Ablasskanal begrenzt ist. Haltenocken haben die Federarme hier nicht, da deren Funktion hier von der Ringfeder übernommen wird.

Für alle zuvor beschriebenen Ausführungen des Flüssigkeitsfilters ist bevorzugt vorgesehen, dass der Ventilkörper in einem oberen, zum Deckel hin verlaufenden Abschnitt als Standrohr ausgeführt ist, auf das der Filtereinsatz aufgesteckt ist, und dass das Innere des Standrohrs einen zum Reinflüssigkeitsablauf führenden Reinflüssigkeitskanal bildet, dessen unteres Kanalende eine in Radialrichtung weisende Mündung aufweist, an welche sich ein ebenfalls in Radialrichtung verlaufender Abschnitt des Reinflüssigkeitsablaufs anschließt. Der als Standrohr ausgeführte Abschnitt des Ventilkörpers bietet einen zentrierenden Halt für den Filtereinsatz und stellt zugleich einen Teil des Strömungsweges für das Abführen der gefilterten Flüssigkeit zur Verfügung.

Um beim Einbauen des mit dem Standrohr ausgeführten Ventilkörpers in das Filtergehäuse die Mündung des Reinflüssigkeitskanals zuverlässig mit dem Reinflüssigkeitsablauf in Deckung zu bringen, ist bevorzugt vorgesehen, dass am Außenumfang des Ventilkörpers und am Innenumfang des Ablasskanals Positioniermittel angeordnet sind, welche bei einem Einführen des Ventilkörpers in den Ablasskanal den Ventilkörper in Umfangsrichtung gesehen in eine solche bestimmte Position relativ zum Ablasskanal zwangsführen, dass die Mündung des Reinflüssigkeitskanals in Deckung mit dem anschließenden Abschnitt des Reinflüssigkeitsablaufs gelangt. Diese Positioniermittel können von an sich bekannter Ausführung sein, beispielsweise in Form einer mit einem Schlitz am Innenumfang des Ablasskanals zusammenwirkenden umfangsseitigen Rippe am Ventilkörper oder in Form einer mit einer Rampe am Innenumfang des Ablasskanals zusammenwirkenden Nase radial außen am Ventilkörper. In jedem Fall sorgen die Positioniermittel dafür, dass der Ventilkörper mit dem Standrohr und dem dadurch verlaufenden Reinflüssigkeitskanal relativ zum Ablasskanal und zum Filtergehäuse selbsttätig passend positioniert wird, ohne dass eine Bedienungsperson hier eine besondere Aufmerksamkeit walten lassen muss.

Bei einer Wartung des Flüssigkeitsfilters wird mit dem Abnehmen des Deckels vom Filtergehäuse das Ablassventil geöffnet, um im Filtergehäuse befindliche Flüssigkeit abströmen zu lassen. Um dabei einen unerwünschten Eintritt von verschmutzter Flüssigkeit in den Reinflüssigkeitskanal möglichst weitgehend zu vermeiden, wird vorgeschlagen, dass am Außenumfang des Ventilkörpers unterhalb der Mündung des Reinflüssigkeitskanals ein in Öffnungsstellung des Ventilkörpers den Reinflüssigkeitsablauf abschirmender Kragen angebracht oder angeformt ist.

Bei den Ausführungen des Flüssigkeitsfilters mit der Ringfeder ist es für eine einfache Bedienung zweckmäßig, dafür zu sorgen, dass das Umformelement selbsttätig in einen passenden Eingriff mit der Ringfeder gebracht wird. Hierzu schlägt die Erfindung vor, dass am Außenumfang des Standrohrs und am Innenumfang des Umformelementes oder des Filtereinsatzes Positioniermittel angeordnet sind, welche bei einem Aufstecken des Filtereinsatzes auf das Standrohr das Umformelement in Umfangsrichtung gesehen in eine solche bestimmte Position relativ zum Standrohr und zur Ringfeder zwangsführen, dass die Arme des Umformelementes in Eingriff mit den inneren Rautenecken der Ringfeder gelangen. Auch hier können die Positioniermittel wieder von an sich bekannter Ausführung sein, beispielsweise wie weiter oben schon kurz beispielhaft genannt.

In vielen Anwendungsfällen von Flüssigkeitsfiltern ist es erwünscht, bei einer Verstopfung des Filterelementes einen Umgehungsweg für die Flüssigkeit freizugeben, um eine nachgeordnete Komponente mit Flüssigkeit zu versorgen, auch wenn diese dann im Ausnahmefall nicht gefiltert wird. Zu diesem Zweck schlägt die Erfindung einen Flüssigkeitsfilter vor, in dem ein Filterumgehungsventil mit einem axial verschiebbaren Ventilkörper angeordnet ist, dessen Schließrichtung zum Deckel hin weist, wobei zwischen dem Ventilkörper des Ablassventils und dem Ventilkörper des Filterumgehungsventils eine Druckfeder angeordnet ist, die bei am Filtergehäuse angebrachtem Deckel beide Ventilkörper zugleich in deren jeweiliger Schließrichtung vorbelastet. Auf diese Weise wird die zusätzliche Funktion des Filterumgehungsventils im den Flüssigkeitsfilter integriert, wobei die dabei vorgesehene Druckfeder vorteilhaft eine doppelte Funktion hat. Somit genügt auch für die Ausführung des Flüssigkeitsfilters mit Ablassventil und Filterumgehungsventil eine einzige Feder, um beide Ventile in ihrer jeweiligen Schließrichtung vorzubelasten.

Eine räumliche besonders günstige Anordnung ergibt sich dann, wenn der Ventilkörper des Filterumgehungsventils in einem oberen Endbereich des Standrohrs geführt ist und die Druckfeder im Standrohr angeordnet und einerseits an diesem und andererseits am Ventilkörper des Filterumgehungsventils abgestützt ist. Die Druckfeder übt so ohne Zwischenschaltung irgendwelcher weiterer Bauteile Ihre Kraft unmittelbar sowohl auf den Ventilkörper des Ablassventils als auch auf den Ventilkörper des Filterumgehungsventils aus, was einen Kraftverlust durch Reibung vermeidet.

Um bei der Wartung des erfindungsgemäßen Flüssigkeitsfilters eine möglichst einfache und saubere Handhabung für das Bedienungspersonal zu erreichen, wird vorgeschlagen, dass zwischen dem Deckel und dem Filtereinsatz eine erste Rastverbindung vorgesehen ist, dass zwischen dem Filtereinsatz und dem Ventilkörper des Ablassventils eine zweite Rastverbindung vorgesehen ist und dass die Haltekraft der ersten Rastverbindung größer ist als die Haltekraft der zweiten Rastverbindung. Hiermit wird bei einem Abnehmen des Deckels vom Filtergehäuse gewährleistet, dass vom Deckel zunächst sowohl der Filtereinsatz und auch der Ventilkörper des Ablassventils mitgenommen werden. Sobald jedoch der Ventilkörper an seinen Bewegungsanschlag in Öffnungsrichtung gelangt, löst sich die schwächere Rastverbindung zwischen dem Filtereinsatz und dem Ventilkörper, während die stärkere Rastverbindung zwischen dem Deckel und Filtereinsatz bestehen bleibt. So wird der Filtereinsatz mit dem Deckel vom Filtergehäuse entfernt. Danach kann der Filtereinsatz vom Deckel gelöst werden und es kann ein frischer Filtereinsatz mit dem Deckel verrastet werden. Beim Anbringen des Deckels am Filtergehäuse wird der frische Filtereinsatz mit dem Ventilkörper des Ablassventils verrastet, so dass bei der nächsten Wartung wieder der zuvor beschriebene Vorgang ablaufen kann. Eine diesbezügliche weitere Ausgestaltung sieht vor, dass die beiden Rastverbindungen eine gegenseitige Verdrehung der darüber verbundenen Teile, nämlich Deckel, Filtereinsatz und Ventilkörper des Ablassventils, erlaubend und zugleich ein begrenztes Drehmoment übertragend ausgebildet sind. In dieser Ausgestaltung kann ein als Schraubdeckel ausgeführter Deckel des Filtergehäuses eingesetzt werden. Die Drehung des Schraubdeckels zum Zweck des Anbringens des Deckels am Filtergehäuse wird über die Rastverbindungen auf den Ventilkörper übertragen, um diesen im Zusammenwirken mit den weiter oben beschriebenen Positioniermitteln in die gewünschte Verdrehstellung zu bringen. Sobald die Positioniermittel In den positionierenden Eingriff miteinander getreten sind, ist der Ventilkörper nicht mehr weiter verdrehbar, so dass nun die Rastverbindungen relativ zueinander verdreht werden, bis der Deckel seine endgültige Schließstellung erreicht hat.

Im Folgenden werden Ausführungsbeispiele der Erfindung anhand einer Zeichnung erläutert. Die Figuren der Zeichnung zeigen:
- Figur 1: einen Flüssigkeitsfilter in einer ersten Ausführung im Längsschnitt, in einem Zustand während seines ersten Zusammenbauens,
- Figur 2: das in Figur 1 eingekreiste Detail I in vergrößerter Darstellung,
- Figur 3: einen Schnitt gemäß der Linie O - O in Figur 1,
- Figur 4: einen Schnitt gemäß der Linie K - K in Figur 1,
- Figur 5: den Flüssigkeitsfilter aus Figur 1 im Längsschnitt, in seinem zusammengebauten Betriebszustand,
- Figur 6: das in Figur 5 eingekreiste Detail B in vergrößerter Darstellung,
- Figur 7: einen Schnitt gemäß der Linie L - L in Figur 5,
- Figur 8: den Flüssigkeitsfilter aus Figur 1 im Längsschnitt, in einem Zustand während einer Filterwartung,
- Figur 9: das in Figur 8 eingekreiste Detail D in vergrößerter Darstellung,
- Figur 10: das in Figur 8 eingekreiste Detail E in vergrößerter Darstellung,
- Figur 11: einen Schnitt gemäß der Linie M - M in Figur 8,
- Figur 12: den Flüssigkeitsfilter aus Figur 1 im Längsschnitt, mit abgenommenen Deckel und Filtereinsatz während einer Filterwartung,
- Figur 13: das in Figur 12 eingekreiste Detail G in vergrößerter Darstellung,
- Figur 14: einen Schnitt gemäß der Linie N - N in Figur 12,
- Figur 15: einen Ventilkörper des Flüssigkeitsfilters in einer ersten Ansicht,
- Figur 16: den Ventilkörper in einer zweiten, verdrehten Ansicht,
- Figur 17: eine Montageeinheit aus Ventilkörper, Filtereinsatz, Dichtung und Deckel des Filtergehäuses des Flüssigkeitsfilters, in einer Explosionsdarstellung,
- Figur 18: die aus den Teilen gemäß Figur 17 zusammengebaute Montageeinheit, in Ansicht,
- Figur 19: den Flüssigkeitsfilter in einer zweiten Ausführung im Längsschnitt, in seinem zusammengebauten Betriebszustand,
- Figur 20: einen Schnitt gemäß der Linie C - C in Figur 19,
- Figur 21: den Flüssigkeitsfilter aus Figur 19 in einer aufgeschnittenen Ansicht, mit abgenommenem Deckel und Filtereinsatz während einer Filterwartung,
- Figur 22: den Flüssigkeitsfilter aus Figur 21 im Längsschnitt,
- Figur 23: einen Schnitt gemäß der Linie G - G in Figur 22,
- Figur 24: den Flüssigkeitsfilter aus Figur 19 in einer aufgeschnittenen Ansicht, während einer ersten Phase des Einsetzens eines Filtereinsatzes,
- Figur 25: den Flüssigkeitsfilter in gleicher Darstellung wie in Figur 24, während einer zweiten Phase des Einsetzens des Filtereinsatzes,
- Figur 26: dem Flüssigkeitsfilter in gleicher Darstellung wie in Figur 24 und 25, während einer dritten Phase des Einsetzens des Filtereinsatzes,
- Figur 27: einen Ventilkörper des Flüssigkeitsfilters gemäß Figur 19 in einer ersten Ansicht,
- Figur 28: den Ventilkörper aus Figur 27 in einer zweiten, gedrehten Ansicht,
- Figur 29: ein Umformelement als Einzelteil des Flüssigkeitsfilters gemäß Figur 19, in einer perspektivischen Ansicht,
- Figur 30: eine Ringfeder als Einzelteil des Flüssigkeitsfilters gemäß Figur 19, in einer Draufsicht,
- Figur 31: eine Montageeinheit aus Ringfeder, Ventilkörper, Umformelement, Filtereinsatz, Dichtung und Deckel in einer Explosionsdarstellung,
- Figur 32: die Montageeinheit aus den Teilen gemäß Figur 31 im zusammengebauten Zustand,
- Figur 33: den Flüssigkeitsfilter in einer dritten Ausführung im Längsschnitt, in seinem zusammengebauten Betriebszustand, und
- Figur 34: das in Figur 33 eingekreiste Detail B' in vergrößerter Darstellung.

In der nachfolgenden Figurenbeschreibung werden gleiche Teile in den verschiedenen Figuren stets mit der gleichen Bezugsziffer bezeichnet, so dass nicht zu allen Figuren jeweils alle Bezugszeichen erläutert werden.

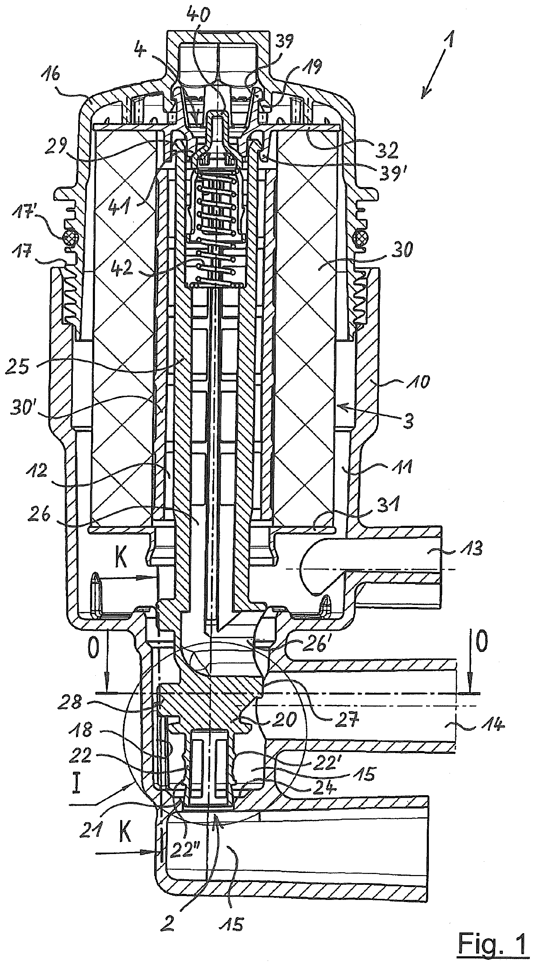

Figur 1 der Zeichnung zeigt einen ersten Flüssigkeitsfilter 1 in einem Längsschnitt während seines ersten Zusammenbauens. Der Flüssigkeitsfilter 1 umfasst ein Filtergehäuse 10, welches in seinem oberen Teil becherförmig ist und oberseitig mit einem Schraubdeckel 16 unter Zwischenlage eine Dichtung 17' mittels einer Schraubverbindung 17 dicht verschließbar ist. In Inneren des Filtergehäuses 10 ist ein hohlzylindrischer Filtereinsatz 3 angeordnet, der das Innere des Filtergehäuses 10 in eine Rohseite 11 und einer Reinseite 12 trennt. Die Rohseite 11 ist mit einem Rohflüssigkeitszulauf 13 verbunden; die Reinseite 12 ist mit einem Reinflüssigkeitsablauf 14 verbunden. Außerdem ist noch einen Flüssigkeitsablasskanal 15 vorhanden, der zum Entleeren des Filtergehäuses 10 bei einer Filterwartung dient.

Das Filtergehäuse 10 mit dem Rohflüssigkeitszulauf 13, dem Reinflüssigkeitsablauf 14 und dem Flüssigkeitsablasskanal 15 ist zweckmäßig ein Druckgussteil aus Leichtmetall. Der Deckel 16 kann ebenfalls ein Druckgussteil aus Leichtmetall oder alternativ auch ein Spritzgussteil aus Kunststoff sein.

Der Filtereinsatz 3 besteht aus einem hohlzylindrischen, gefalteten oder gewickelten Filterstoffkörper 30, der stirnseitig von einer unteren Stirnscheibe 31 und einer oberen Stirnscheibe 32 eingefasst ist. Im Inneren des Filterstoffkörpers 30 ist ein Stützgitter 30' angeordnet, welches den Filterstoffkörper 30 bei seiner Durchströmung in Radialrichtung von außen nach innen gegen ein Kollabieren abstützt.

Im unteren Teil des Filtergehäuses 10 ist im Verlauf des Flüssigkeitsablasskanals 15 ein Ablassventil 2 angeordnet. Dieses besteht aus einem Ventilkörper 20, der mit einem im Ablasskanal 15 angeformten Ventilsitz 21, der eine Verengung des Kanals bildet, zusammenwirkt. Nach oben hin ist der Ventilkörper 20 als Standrohr 25 ausgebildet, welches in einem unteren Abschnitt geschlossen und in einem oberen Abschnitt gitterförmig ausgeführt ist. Durch das Innere des Standrohrs 25 verläuft ein Reinflüssigkeitskanal 26, der an seinem unteren Ende in eine radial nach außen weisenden Mündung 26' endet. Über den gitterförmigen Abschnitt des Standrohrs 25 steht der Reinflüssigkeitskanal 26 in Strömungsverbindung mit der Reinseite 12 des Flüssigkeitsfilters 1.

Der Filtereinsatz 3 besitzt auf der Oberseite seiner oberen Stirnscheibe 32 Rastverbindungsmittel 39, die hier in rastendem Eingriff mit Rastverbindungsmitteln 19 an der Innenseite des Deckels 16 stehen. Weitere Rastverbindungsmittel 39' sind an der Unterseite der oberen Stirnscheibe 32 angeformt und stehen hier in Rasteingriff mit einem Rastverbindungsmittel 29 am oberen Ende des Standrohrs 25. Auf diese Weise wird eine vormontierte Baueinheit, umfassend den Deckel 16, den Filtereinsatz 3 und den Ventilkörper 20 mit dem Standrohr 25, gebildet, die als Einheit mit dem Filtergehäuse 10 in der in Figur 1 gezeigten Art und Weise von oben her verbindbar ist. Zu diesem Zweck wird der Ventilkörper 2 in das Gehäuse 10 und darin in den Flüssigkeitsablasskanal 15 eingeführt, bis der Deckel 16 lose auf dem oberen Rand des Filtergehäuses 10 aufliegt. Dieser Zustand ist in Figur 1 dargestellt.

Durch Verdrehen des Deckels 16 wird dieser dann mit dem Filtergehäuse 10 in Schraubeingriff gebracht, wodurch gleichzeitig der Filtereinsatz 3 und der Ventilkörper 20 mit dem Standrohr 25 nach unten bewegt werden.

Vom unteren Ende des Ventilkörpers 20 erstrecken sich mehrere, hier vier, Federzungen 22 axial nach unten. Jede Federzungen 22 trägt auf ihrer Außenseite je einen Haltenocken 22' und einen widerhakenförmigen Vorsprung 22". Bei der Bewegung des Ventilkörpers 20 nach unten beim Zusammenbauen des Flüssigkeitsfilters 1 werden die Federzungen 22 unter radial nach innen erfolgendem Einfedern axial nach unten durch den Ventilsitz 21 geschoben, wonach die Federzungen 22 wieder in ihre ursprüngliche Lage ausfedern. Ein oberer Rand des Ventilsitzes 21 bildet eine Federelementauflage 24, die im Zustand des Flüssigkeitsfilters 1 gemäß Figur 1 noch keine Funktion hat.

Der Reinflüssigkeitsablauf 14 verläuft in Radialrichtung und schließt im zusammengebauten Zustand des Flüssigkeitsfilters 1 an die Mündung 26' an. Damit die Mündung 26' und der Reinflüssigkeitsablauf 14 bei der Montage des Flüssigkeitsfilters 1 zuverlässig miteinander zur Deckung gelangen, sind im Ablasskanal 15 und am Ventilkörper 20 zusammenwirkende Positioniermittel 18 und 28 vorgesehen. Das Positioniermittel 18 ist ein in Axialrichtung des Ablasskanals 15 verlaufender Schlitz, das zugehörige Positioniermittel 28 am Ventilkörper 20 ist eine radial nach außen vorragende, durch den Schlitz geführte Zunge.

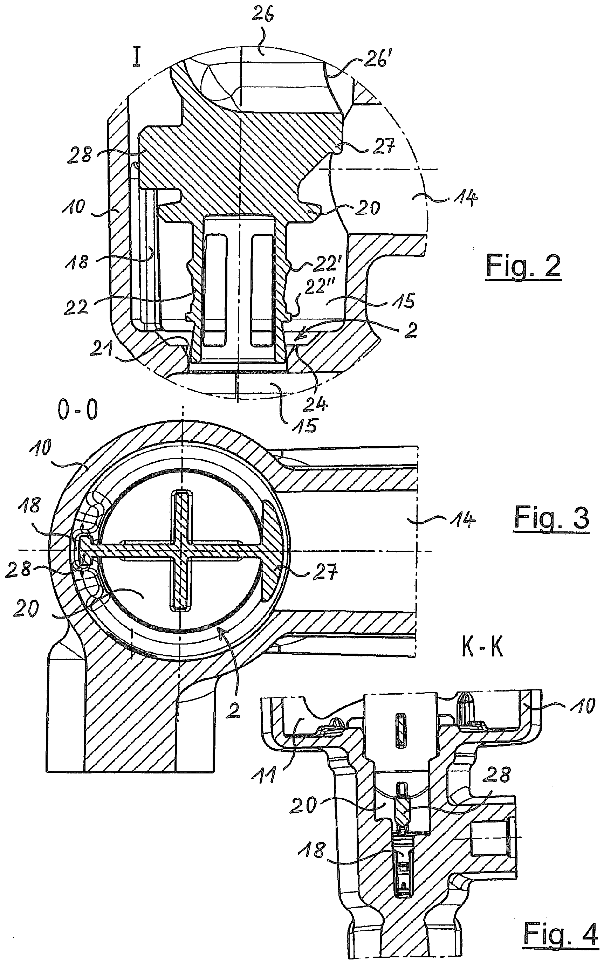

In Figur 2 ist als vergrößertes Detail I aus Figur 1 der untere Bereich des Ventilkörpers 20 mit dem ihn umgebenden Teil des Filtergehäuses 10 dargestellt. Links in Figur 2 sind die Positioniermittel 18 und 28 sichtbar, die beim axialen Einführen des Ventilkörpers 20 in den Ablasskanal 15 die Mündung 26' in Deckung mit dem Reinflüssigkeitsablauf 14 zwangsführen. An der Unterseite des Ventilkörpers 20 sind die Federarme 22 angeordnet, welche auf ihrer Außenseite jeweils den Haltenocken 22' und den Vorsprung 22" aufweisen. Im Zustand gemäß Figur 1 und Figur 2 ragt der Ventilkörper 20 mit seinen Federzungen 22 gerade in den Ventilsitz 21 des Ablassventils 2 hinein.

Rechts oben in Figur 2 ist noch ein Teil der Mündung 26' des Reinflüssigkeitskanals 26 im Standrohr 25 erkennbar. Unter der Mündung 26' ist ein Kragen 27 an das Standrohr 25 angeformt, dessen Funktion weiter unten noch erläutert wird.

Figur 3 zeigt einen Schnitt gemäß der Linie O - O in Figur 1, welcher in Höhe des Reinflüssigkeitsablaufs 14 verläuft, der im rechten Teil der Figur 3 sichtbar ist. Links davon liegt das Ablassventil 2 mit dem hier von oben sichtbaren Ventilkörper 20. An dessen in Figur 3 linker Seite ist das Positioniermittel 28 angeformt, welches mit dem schlitz- oder nutförmigen Positioniermittel 18 an der inneren Oberfläche des Filtergehäuses 10 zusammenwirkt. An der dem Positioniermittel 28 gegenüberliegende Seite ist der Kragen 27 des Standrohrs 25 erkennbar.

Figur 4 verdeutlicht anhand des Schnittes gemäß der Linie K - K in Figur 1 das Zusammenwirken der Positioniermittel 18 und 28. Beim Anschrauben des Deckels überträgt dieser mittels der Rastverbindungsmittel ein begrenztes Drehmoment auf den Ventilkörper 20, so dass dieser zunächst zusammen mit dem Schraubdeckel verdreht wird. Wenn die in Figur 4 dargestellte Position erreicht ist, stößt das Positioniermittel 28 am Außenumfang des Ventilkörpers 20 an die eine Kante des schlitzförmigen Positioniermittels 18 an, wodurch eine weitere Verdrehung des Ventilkörpers 20 verhindert wird. Vielmehr kann von nun an der Ventilkörper 20 sich nur noch in Axialrichtung nach unten bewegen, wobei das Positioniermittel 28 sich innerhalb des schlitzförmigen Positioniermittels 18 weiter nach unten bewegt. Dabei dreht sich nun der Deckel in den Rastverbindungsmitteln relativ zum Ventilkörper 20.

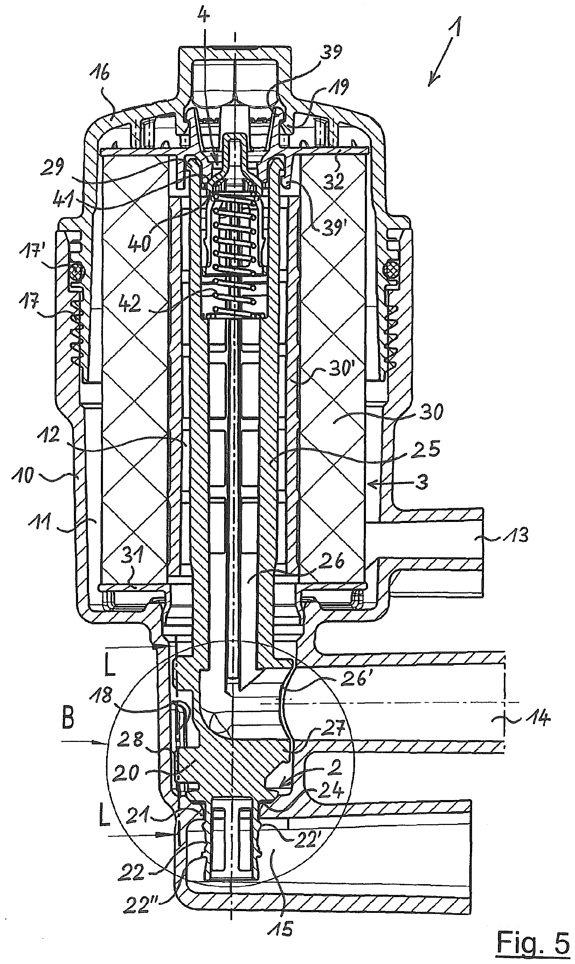

In Figur 5 ist der Flüssigkeitsfilter 1 in gleicher Darstellung wie in Figur 1, nun aber in seinem zusammengebauten Betriebszustand, dargestellt. Der Deckel 16 ist nun fest mit dem Filtergehäuse 10 verschraubt. Der Ventilkörper 20 hat seine Schließstellung erreicht, in der er dichtend am Ventilsitz 21 anliegt. Die Federarme 22 ragen durch den Ventilsitz 21 hindurch, wobei nun sowohl die Haltenocken 22' als auch die Vorsprünge 22" durch den Ventilsitz hindurchgedrückt sind und unterhalb des Ventilsitzes 21 liegen. Die Mündung 26' liegt nun in vollständiger Deckung mit dem Reinflüssigkeitsablauf 14.

In diesem Zustand des Flüssigkeitsfilters 1 kann zu filternde Rohflüssigkeit über den Rohflüssigkeitszulauf 13 auf die Rohseite 11 des Filters 1 geleitet werden. Von der Rohseite 11 strömt die Flüssigkeit durch den Filterstoffkörper 30 des Filtereinsatzes 3 zur Reinseite 12, welche mit dem Reinflüssigkeitskanal 26 im Standrohr 25 in Strömungsverbindung steht. Durch den Reinflüssigkeitskanal 26 und dann durch den Reinflüssigkeitsablauf 14 wird gefilterte Reinflüssigkeit abgeführt. Das Ablassventil 2 ist hier geschlossen, so dass durch den Flüssigkeitsablasskanal 15 keine Flüssigkeit strömt.

Wie aus Figur 5 und auch aus Figur 1 ersichtlich ist, umfasst der Flüssigkeitsfilter 1 neben dem Ablassventil 2 ein Filterumgehungsventil 4, welches im oberen Bereich von Standrohr 25 und Filtereinsatz 3 angeordnet ist. Hierzu ist ein Ventilkörper 40 innerhalb des oberen Endbereichs des Standrohrs 25 axial verschieblich geführt. In der oberen Stirnscheibe 32 des Filtereinsatzes 3 ist ein passender Ventilsitz 41 angeformt, mit dem der Ventilkörper 40 zusammenwirkt. Durch eine Druckfeder 42 wird der Ventilkörper 40 in Schließrichtung vorbelastet und gegen seinen Ventilsitz 41 gedrückt. Die Druckfeder 42 ist mit ihren anderen Ende an einer Stufe in Standrohr 25 abgestützt, so dass die Feder bei angebrachtem Deckel 16 über das Standrohr 25 auch auf den Ventilkörper 20 des Ablassventils 2 eine in dessen Schließrichtung weisende Vorbelastungskraft ausübt.

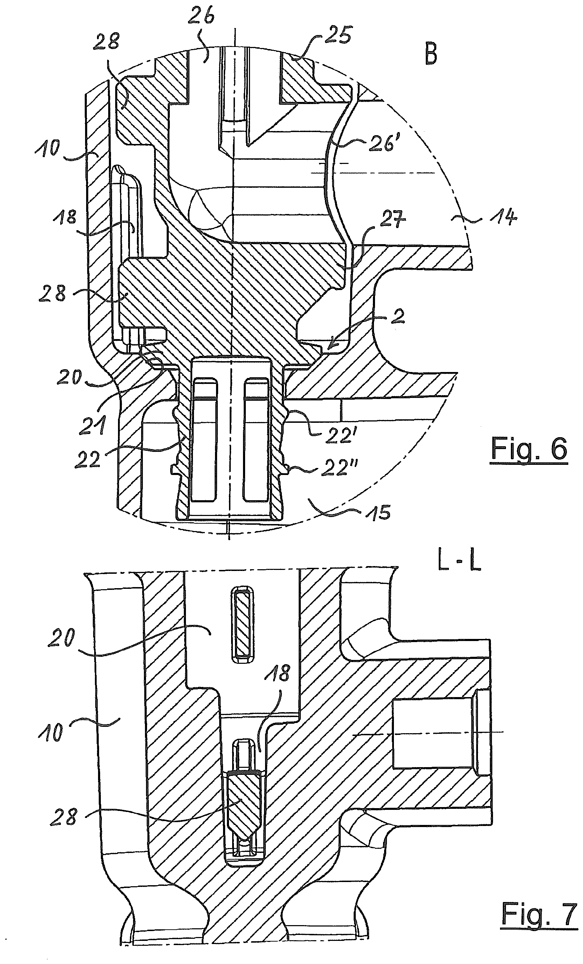

In Figur 6 ist das in Figur 5 eingekreiste Detail B vergrößert dargestellt. Im Zentrum der Figur 6 ist der Ventilkörper 20 sichtbar, der hier in dichtender Anlage an dem Ventilsitz 21 anliegt. Die Federarme 21 ragen durch den Ventilsitz 21 hindurch und tragen auf ihrer Außenseite jeweils den Haltenocken 22' und den Vorsprung 22". Im oberen Teil der Figur 6 ist ein kleiner Abschnitt des Standrohrs 25 mit dem darin verlaufenden Reinflüssigkeitskanal 26 sichtbar, dessen Mündung 26' in voller Deckung mit dem Reinflüssigkeitsablauf 14 liegt. Diese gegenseitige Deckung von Mündung 26' und Reinflüssigkeitsablauf 14 wird durch die zusammenwirkenden Positioniermittel 18 und 28 gewährleistet.

Figur 7 zeigt, in gleicher Darstellung wie die Figur 4, das Zusammenwirken der Positioniermittel 18 und 28, wobei hier nun das Positioniermittel 28 seine Endstellung im schlitzförmigen Positioniermittel 18 erreicht hat. Im Hintergrund ist noch ein kleiner Teil des Außenumfangs des Ventilkörpers 20 innerhalb des Filtergehäuses 10 erkennbar.

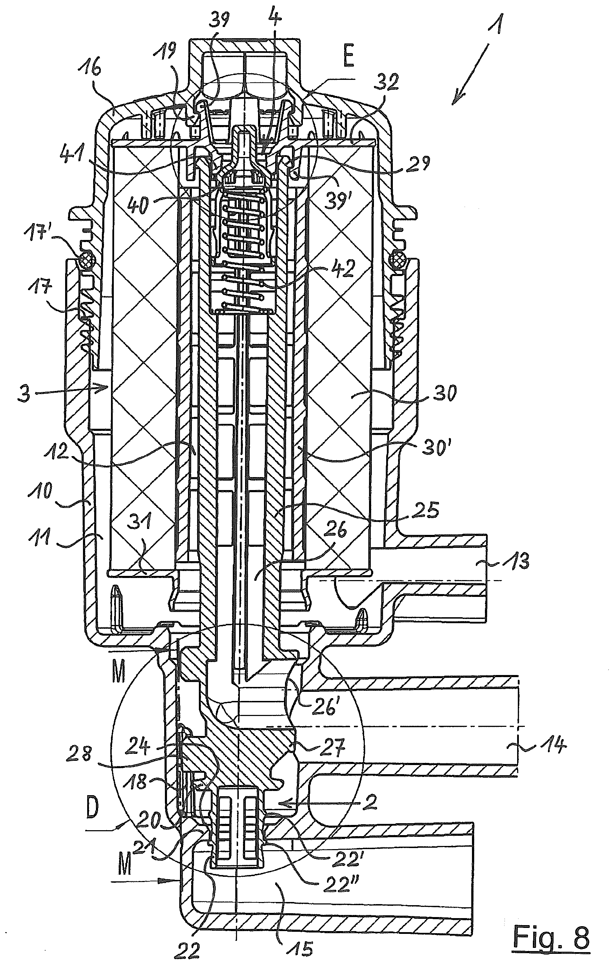

Die Figur 8 der Zeichnung zeigt den Flüssigkeitsfilter 1 gemäß Figur 1 in einem Zustand während einer Filterwartung. Zum Zweck der Wartung wird der Deckel 16 vom Filtergehäuse 10 abgeschraubt, wodurch sich zunächst der Deckel 16 zusammen mit dem damit verrasteten Filterelement 3 und dem damit seinerseits verrasteten Ventilkörper 20 einschließlich des Standrohrs 25 relativ zum Filtergehäuse 10 nach oben bewegt wird. Hierdurch werden die Federarme 22 relativ zum Ventilsitz 21 nach oben bewegt, bis die Vorsprünge 22" an der Unterseite des Ventilsitzes 21 anschlagen und eine weitere Bewegung des Ventilkörpers 20 nach oben sperren. Ein weiteres Losdrehen des Deckels 16 vom Filtergehäuse 10 führt dann dazu, dass die Rastverbindung zwischen dem Ventilkörper 20 und dem Filterelement 3 über die Rastverbindungsmittel 29 und 39' selbsttätig gelöst wird, so dass dann der Deckel 16 nur noch den über die Rastverbindungsmittel 19 und 39 verbundenen Filtereinsatz 3 mitnimmt.

Sobald der Ventilkörper 20 mit dem Standrohr 25 von dem Filtereinsatz 3 gelöst ist, fällt der Ventilkörper 20 um eine geringe Wegstrecke nach unten zurück, jedoch nur soweit, bis die Haltenocken 22' auf der Federelementauflage 24 an der Oberseite des Ventilsitzes 21 zu liegen kommen. Solange nun keine weiteren Kräfte auf den Ventilkörper 20 ausgeübt werden, behält er diese Stellung, in der das Ablassventil 2 geöffnet ist, bei. Durch das geöffnete Ablassventil 2 kann die im Inneren des Filtergehäuses 10 befindliche Flüssigkeit in den Flüssigkeitsablasskanal 15 abfließen, der beispielsweise zu einem Ölsumpf einer zugehörigen Brennkraftmaschine führt. Da der Ventilkörper 2 in Öffnungsstellung gehalten wird, hat auch eine Flüssigkeit höherer Viskosität ausreichend Zeit, vollständig aus dem Filtergehäuse 10 abzufließen. Mittels des unterhalb der Mündung 26' angeformten Kragens 47 wird ein Eintritt von abfließender Flüssigkeit in den Reinflüssigkeitsablauf 14 weitestgehend verhindert.

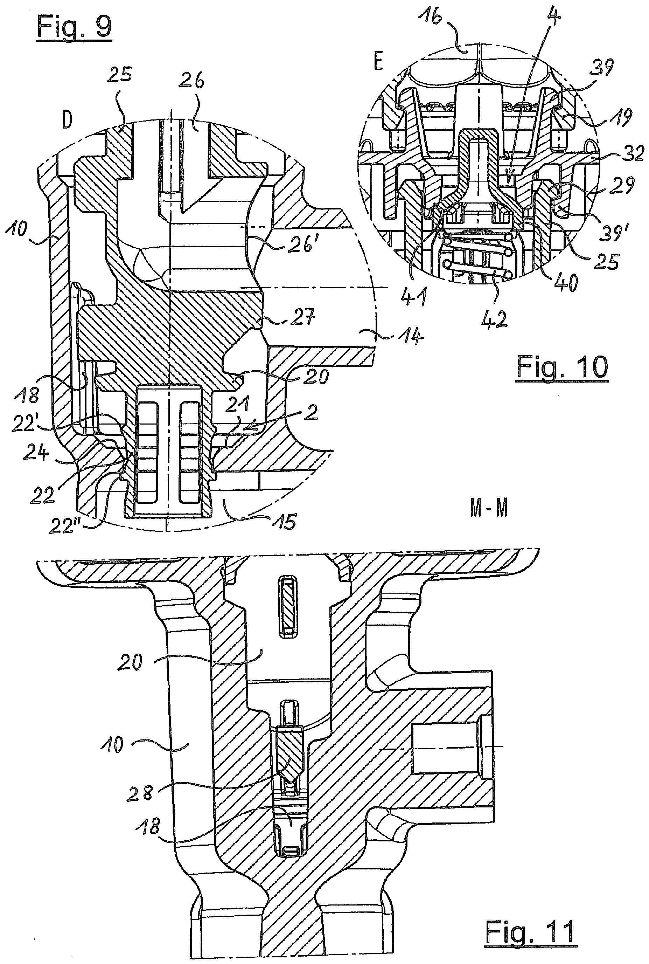

In Figur 9 ist das in Figur 8 eingekreiste Detail D vergrößert dargestellt. Im Zentrum der Figur 9 ist der Ventilkörper 20 sichtbar, der nun in einem Abstand von Ventilsitz 21 liegt, so dass das Ablassventil 2 jetzt offen ist. Die Federarme 22 laufen durch den Ventilsitz 21 hindurch. Die Vorsprünge 22" liegen sperrend an der Unterseite des Ventilsitzes 21 an und erlauben keine weitere Bewegung des Ventilkörpers 20 nach oben. Oben in Figur 9 ist ein kurzer Abschnitt des Standrohrs 25 mit dem Reinflüssigkeitskanal 26 sichtbar, der nach rechts in die Mündung 26' übergeht. Der Kragen 27 schirmt den Reinflüssigkeitsablauf 14 weitgehend gegen einen Zutritt von noch nicht gefilterter, durch den Flüssigkeitsablasskanal 15 abströmender Flüssigkeit ab.

In Figur 10 ist das in Figur 8 eingekreiste Detail E vergrößert dargestellt, welches im Wesentlichen das Filterumgehungsventil 4 zeigt. In der oberen Stirnscheibe 32 ist als zentrale Durchbrechung der Ventilsitz 41 ausgebildet, mit dem der Ventilkörper 40 zusammenwirkt. Durch die Druckfeder 42 wird der Ventilkörper 40 dichtend an den Ventilsitz 41 angedrückt, solange ein Differenzdruck zwischen der Rohseite 11 und der Reinseite 12 einen vorgebbaren Grenzwert nicht überschreitet. Wird der Grenzwert überschritten, öffnet das Filterumgehungsventil 4 und die Flüssigkeit kann unter Umgehung des Filterstoffkörpers von der Rohseite zur Reinseite fließen.

Radial außen vom Ventilkörper 40 sind die Rastverbindungsmittel 29 und 39' zwischen dem Filtereinsatz und dem Standrohr 25 sichtbar; oberhalb der oberen Stirnscheibe 32 liegen die den Filtereinsatz und dem Deckel 16 lösbar verbindenden Rastverbindungsmittel 19 und 39.

In Figur 11 ist ein Schnitt gemäß der Linie M - M in Figur 8 gezeigt, welcher in gleicher Darstellung wie die Figuren 4 und 7 das Zusammenwirken der Positioniermittel 18 und 28 veranschaulicht. Insbesondere macht Figur 11 deutlich, dass die Positioniermittel 18 und 28 auch im geöffneten Zustand des Ablassventils 2 ihren positionierenden Eingriff relativ zueinander beibehalten, so dass der Ventilkörper 20 mit dem Standrohr 24 relativ zum Filtergehäuse 10 nicht verdrehbar ist.

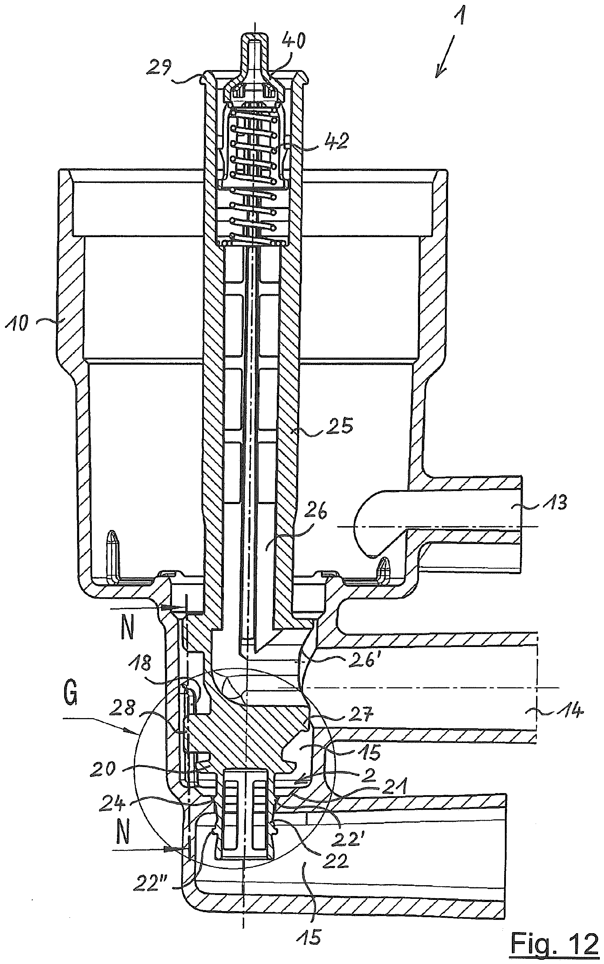

Figur 12 zeigt wieder im Längsschnitt den Flüssigkeitsfilter 1 aus den vorherigen Figuren, nun mit vollständig entferntem Deckel und Filtereinsatz. Das Filtergehäuse 10 ist nun nach oben hin offen und leer. Im Flüssigkeitsablasskanal 15 liegt der Ventilkörper 20 in einer vom Ventilsitz 21 abgehobenen Stellung, so dass weiterhin das Ablassventil 2 geöffnet ist. In dieser Stellung wird der Ventilkörper 20 durch Anlage der Haltenocken 22' auf der Federelementauflage 24 gehalten, die an der Oberseite des Ventilsitzes 21 angeformt ist. Ein selbsttätiges Zurückfallen des Ventilkörpers 20 in die Schließstellung auf den Ventilsitz 21 wird somit verhindert. Eventuell noch im Filtergehäuse 10 befindliche Flüssigkeit hat somit ausreichend Zeit, durch das offene Ablassventil 2 und den Ablasskanal 15 abzufließen. Durch den Kragen 27 ist der Reinflüssigkeitsablauf 14 weitgehend gegen einen Eintritt von ungefilterter abfließender Flüssigkeit geschützt.

Im oberen Teil des Standrohrs 25 sind der Ventilkörper 40 und die Druckfeder 42 als Teile des Filterumgehungsventils angeordnet, wobei nun bei fehlendem Filterelement und Deckel die Feder 42 entspannt ist. Somit kann die Feder 42 auch keine Vorbelastungskraft auf den Ventilkörper 20 des Ablassventils 2 in dessen Schließrichtung ausüben. Am oberen Rand des Standrohrs 25 ist noch dessen Rastverbindungsmittel 29 erkennbar, das zum lösbaren Verbinden des Standrohrs 25 mit dem Filterelement dient.

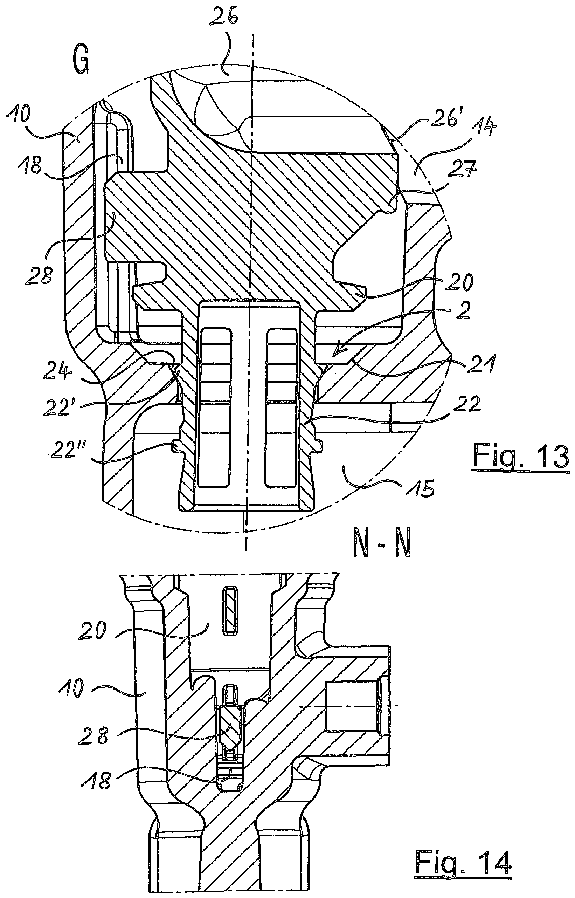

In Figur 13 ist das in Figur 12 eingekreiste Detail G vergrößert dargestellt. In Zentrum der Figur 12 liegt wieder der Ventilkörper 20, der hier Abstand von seinem Ventilsitz 21 hat, so dass das Ablassventil 2 geöffnet ist. Die Federarme 22 laufen durch den Ventilsitz 21 hindurch, wobei nun die Haltenocken 22' auf der Federelementauflage 24 am oberen Rand des Ventilsitzes 21 aufliegend. Hierdurch wird verhindert, dass der Ventilkörper 20 unter Schwerkraftwirkung nach unten in seine Schließstellung fällt.

Links in Figur 13 sind die zusammenwirkenden Positioniermittel 18 und 28 erkennbar, die dafür sorgen, dass die Mündung 26' des Reinflüssigkeitskanals 26 in Deckung mit dem Reinflüssigkeitsablauf 14 bleibt. Unterhalb der Mündung 26' ist der Kragen 27 angeformt.

In Figur 14 ist wieder das Zusammenwirken der Positioniermittel 18 und 28 in gleicher Darstellung wie in den Figuren 4, 7 und 11 dargestellt. Figur 14 verdeutlicht, dass auch im offenen Zustand des Ablassventils 2 bei Anlage der Haltenocken 22' an der Federelementauflage 24 die Positioniermittel 18 und 28 in Eingriff miteinander bleiben.

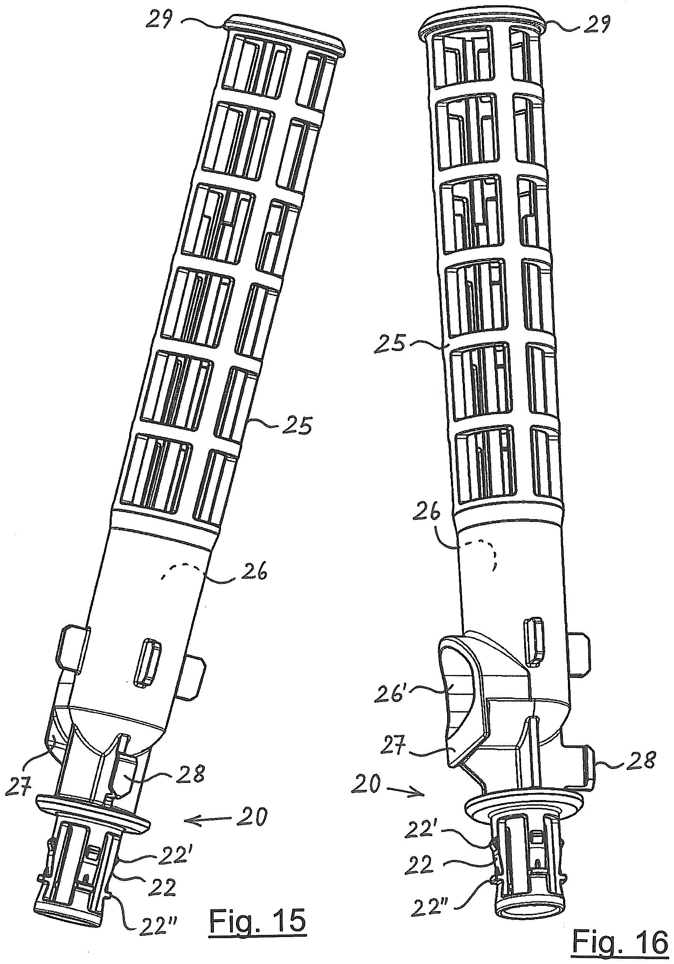

Die Figuren 15 und 16 zeigen in zwei verschiedenen, gegeneinander verdrehten Ansichten jeweils den Ventilkörper 20 einschließlich des Standrohrs 25. Von der Unterseite des Ventilkörpers 20 gehen die Federarme 22 mit jeweils dem Haltenocken 22' und dem Vorsprung 22" aus. Weiter oben liegt am Außenumfang des Ventilkörpers 20 das Positioniermittel 28 in Form der radial vorspringenden Zunge oder Rippe. Im Hintergrund ist in Figur 15 ein Teil des Kragens 27 sichtbar. Durch das Innere des Standrohrs 25 verläuft hier unsichtbar der Reinflüssigkeitskanal 26. Das obere Ende des Standrohrs 25 ist mit dem Rastverbindungsmittel 29 ausgeführt. In der gegenüber Figur 15 gedrehten Ansicht gemäß Figur 16 wird auch die Mündung 26' des Reinflüssigkeitskanals 26 sichtbar.

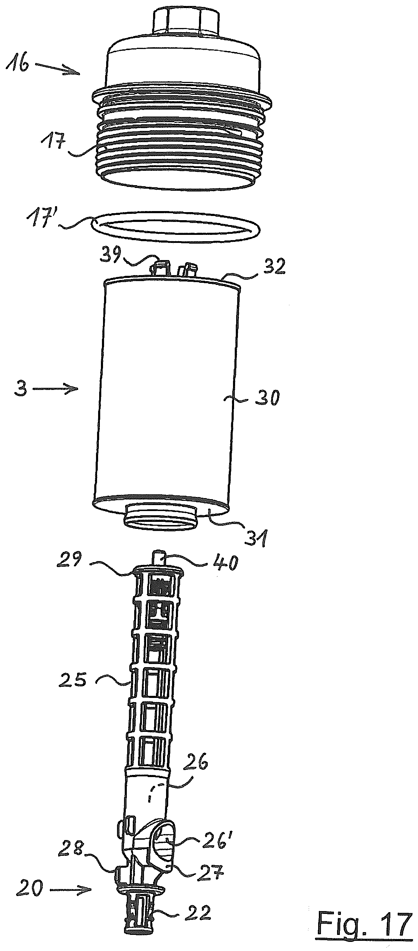

Figur 17 zeigt in einer Explosionsdarstellung die Teile einer vormontierbaren Baueinheit, die aus dem Deckel 16, der Dichtung 17', dem Filtereinsatz 3 und dem Ventilkörper 20 einschließlich Standrohr 25 besteht. Dabei sind die genannten Teile über ihre zuvor schon beschriebenen Rastverbindungsmittel miteinander lösbar verbindbar, indem die Teile in Axialrichtung zusammengefügt und zusammengedrückt werden, bis die Rastverbindungsmittel einrasten.

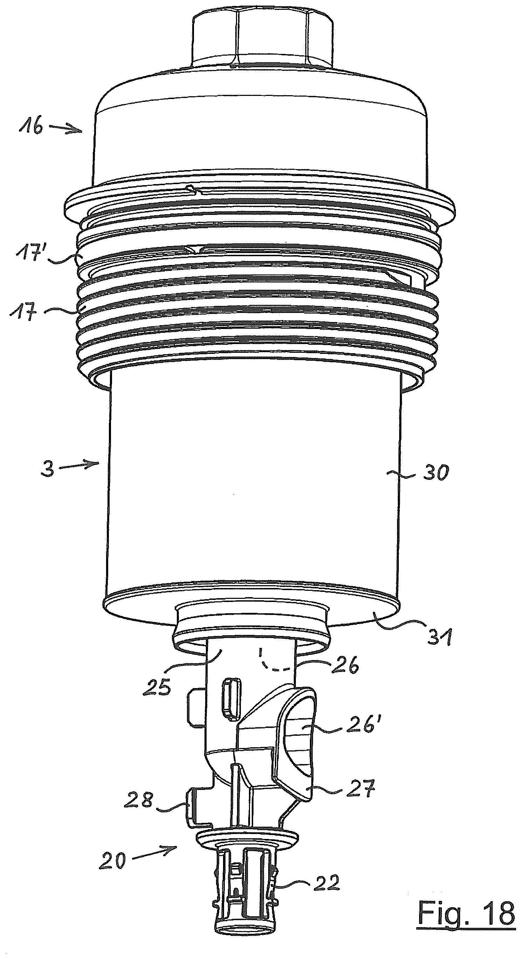

Den so erreichten Zustand der Baueinheit aus Deckel 16, Dichtung 17', Filtereinsatz 3 und Ventilkörper 20 einschließlich Standrohr 25 zeigt die Figur 18. Diese vormontierte Baueinheit kann beispielsweise von einem Zulieferer gefertigt und montiert und dann einen Kunden zugeliefert werden, der sie dann mit seinem Filtergehäuse in einem einfachen Anschraubvorgang mittels der Schraubverbindung 17 verbindet.

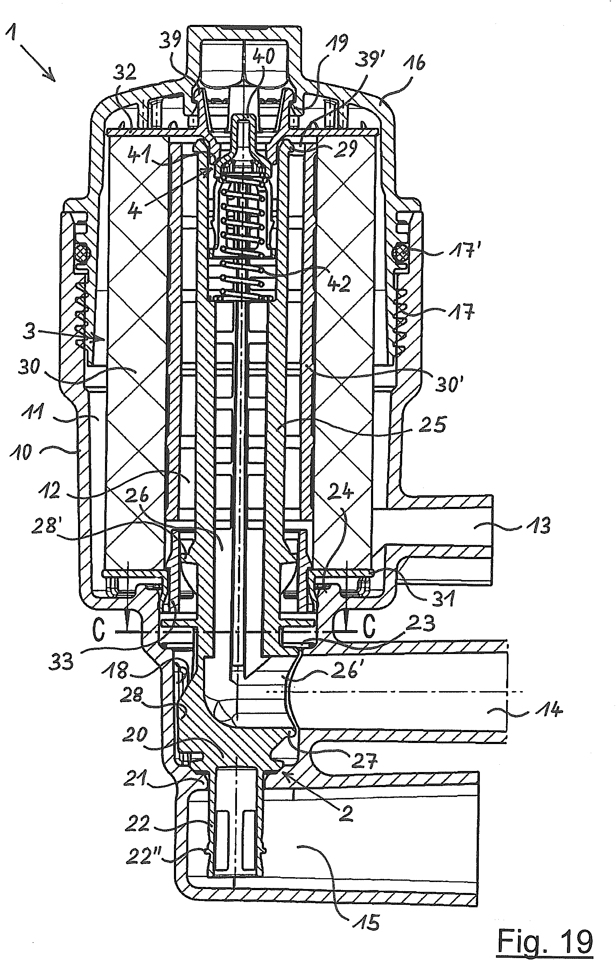

Figur 19 zeigt eine zweite Ausführung des Flüssigkeitsfilters 1, wobei dieser ebenfalls ein Ablassventil 2 und ein Filterumgehungsventil 4 aufweist. In vielen Teilen weist der Flüssigkeitsfilter 1 nach Figur 19 Übereinstimmung mit dem zuvor beschriebenen Flüssigkeitsfilter auf.

Unterschiedlich ist die Ausführung der Mittel, die den Ventilkörper 20 bei einer Filterwartung in Offenstellung des Ablassventils 2 halten. Zu diesem Zweck ist hier an dem Ventilkörper 20 im Bereich von dessen Übergang zum Standrohr 25 eine Ringfeder 23 vorgesehen, welche das Standrohr 25 in dessen unterem Endbereich unmittelbar über der Mündung 26' außen umgibt. Die Ringfeder 23 ist so ausgeführt, dass ihr Durchmesser in Bereichen des Umfangs zwischen zwei Maßen veränderbar ist. Im Zustand gemäß Figur 19 ist der maximale Außendurchmesser der Ringfeder 23 minimal, so dass die Ringfeder 23 in den unteren Teil des Filtergehäuses 10, der eine Vertiefung mit zylindrischer Form bildet, hineinpasst. Diese Form der Ringfeder 23 wird durch ein mit dieser zusammenwirkendes Umformelement 33 an der Unterseite des Filtereinsatzes 3 bewirkt. In dieser Position liegt der Ventilkörper 20 in dichtender Anlage an seinem Ventilsitz 21, so dass nun das Ablassventil 2 geschlossen ist und der Flüssigkeitsfilter 1 betriebsbereit ist.

Auch hier ist der Deckel 16 mit dem Filtereinsatz 3 über Rastverbindungsmittel 19 und 39 lösbar verbunden, ebenso wie der Filtereinsatz 3 mit dem Ventilkörper 20 über dessen Standrohr 25 mittels der Rastverbindungsmittel 29 und 39' lösbar verbunden ist. Wie oben im Zusammenhang mit dem ersten Ausführungsbeispiel des Flüssigkeitsfilters 1 schon beschrieben, dienen die Rastverbindungsmittel dazu, eine Baueinheit aus Deckel 16, Filtereinsatz 3 und Ventilkörper 20 vormontieren und dann mit dem Gehäuse 10 verbinden zu können. Außerdem kann bei einem Losdrehen des Deckels 16 bei einer Wartung des Filters 1 auch hier der Filtereinsatz 3 mit dem Deckel 16 aus dem Gehäuse 10 entnommen werden und gleichzeitig der Ventilkörper 20 zur Öffnung des Ablassventils 2 in seine Öffnungsstellung überführt werden.

Unterhalb der unteren Stirnscheibe 31 des Filtereinsatzes 3 ist im Filtergehäuse 10 eine Federelementauflage 24 angeformt, die in einer Öffnungsstellung des Ventilkörpers 20 mit der Ringfeder 23 zusammenwirkt, wie weiter unten noch beschrieben wird. Hinsichtlich der weiteren Bezugsziffern in Figur 19 wird auf die vorhergehende Beschreibung verwiesen.

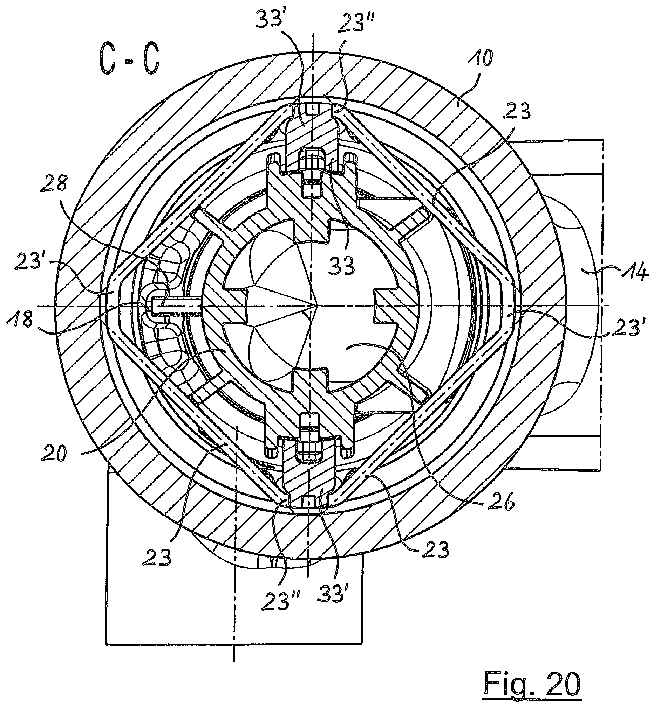

Figur 20 zeigt einen Schnitt gemäß der Linie C - C in Figur 19, wobei die Schnittebene unmittelbar oberhalb der Ringfeder 23 verläuft. In Figur 20 wird der rautenförmigen Umriss der Ringfeder 23 besonders deutlich. Dabei besitzt die Ringfeder 23 zwei einander gegenüberliegende erste, äußere Rautenecken 23' und zwei einander ebenfalls gegenüberliegende, zweite, innere Rautenecken 23". Die beiden inneren Rautenecken 23" stehen hier in Eingriff mit dem Umformelement 33, genauer mit dessen beiden Armen 33', die durch axiales Verschieben des Umformelementes 33 von oben nach unten von innen her in aufweitenden Eingriff mit den Rautenecken 23" gelangt sind. Durch das Aufweiten der Ringfeder 23 an ihren Rautenecken 23" verkleinert sich zugleich der Abstand der beiden ersten Rautenecken 23' voneinander, so dass die Ringfeder 23 insgesamt eine etwa quadratische Form erhält, die ein Einschieben der Ringfeder 23 zusammen mit dem Ventilkörper 20 nach unten in den den Ventilkörper 20 und die Ringfeder 23 aufnehmenden Bereich des Filtergehäuses 10 erlaubt.

Im Zentrum des Ventilkörpers 20 verläuft der Reinflüssigkeitskanal 26, der in den hier nur außerhalb des Gehäuses 10 teilweise von außen sichtbaren Reinflüssigkeitsablauf 14 mündet.

Links in Figur 20 sind die zusammenwirkenden Positioniermittel 18 und 20 sichtbar.

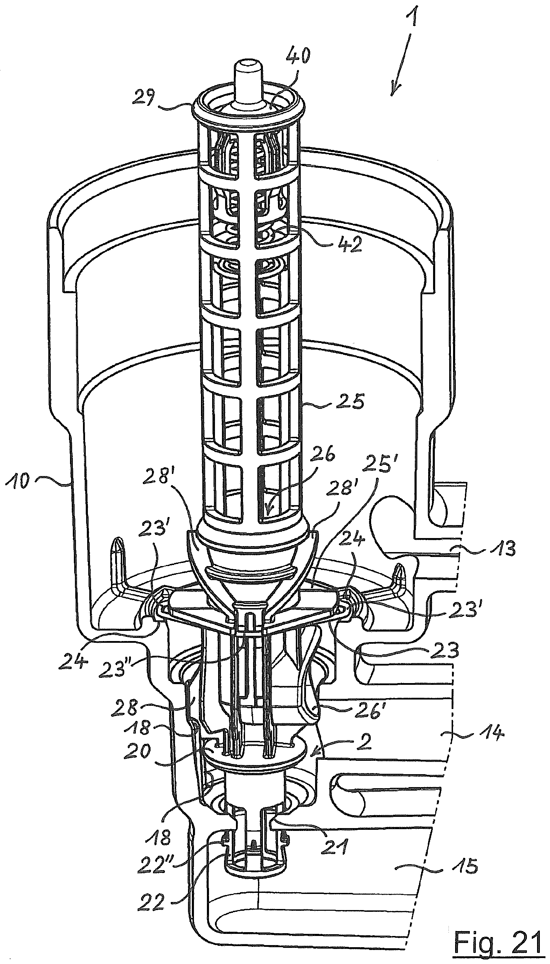

Die Figur 21 zeigt den Flüssigkeitsfilter 1 in einer aufgeschnittenen Darstellung in einem Zustand während seiner Wartung, bei der der Deckel 16 und der Filtereinsatz 3 abgenommen sind. Beim Losdrehen des Deckels 16 werden, wie oben schon beschrieben, der Filtereinsatz 3 und der Ventilkörper 20 nach oben hin mitgenommen. Sobald die Vorsprünge 22" an den Federarme 22 des Ventilkörpers 20 gegen die Unterseite des Ventilsitzes 21 anschlagen, kann sich der Ventilkörper 20 mit dem Standrohr 25 nicht weiter nach oben bewegen und der Ventilkörper 20 mit dem Standrohr 25 löst sich vom Filtereinsatz 3, während die Verbindung zwischen dem Filtereinsatz 3 und dem Deckel 16 weiter bestehen bleibt. Die Haltekräfte der Rastverbindungen sind dazu entsprechend unterschiedlich ausgeführt.

In der ersten Phase des Losdrehens des Deckels 16 gelangt der Ventilkörper 20 relativ zum Filtergehäuse 10 in eine angehobene Position, bis sich die Ringfeder 23 oberhalb der Federelementauflage 24 befindet und die Vorsprünge 22" an der Unterseite des Ventilsitzes 21 anliegend. Bei noch weiterer Bewegung des Deckels 16 zusammen mit dem Filtereinsatz 3 nach oben, gelangt das Umformelement 33 mit seinen Armen 33' außer Eingriff mit den inneren Rautenecken 23" der Ringfeder 23, wodurch sich diese entspannt und in dem Sinne umformt, dass die äußeren Rautenecken 23' nach außen wandern, während die inneren Rautenecken 23" nach innen wandern. Hierdurch wird der Durchmesser der Ringfeder 23 über die äußeren Rautenecken 23' gemessen größer und die Ringfeder 23 kann sich dann nach dem Lösen des Ventilkörpers 20 mit seinem Standrohr 25 vom Filtereinsatz 3 auf der Federelementauflage 24 ablegen. Auf diese Weise hält die Ringfeder 23 den Ventilkörper 20 mit dem Standrohr 25 in der erhöhten, in Figur 21 dargestellten Lage, in der das Ablassventil 2 geöffnet ist und geöffnet gehalten wird. Im Gehäuse 10 befindliche Flüssigkeit kann nun durch das offene Ablassventil 2 und dem Flüssigkeitsablasskanal 15 abströmen.

Die Positioniermittel 18 und 28, die für die Zuordnung der Mündung 26' zum Reinflüssigkeitskanal 14 sorgen, bleiben auch in der offenen Stellung des Ablassventils 2 in Eingriff miteinander.

Um beim Aufsetzen des Filtereinsatzes 3 auf das Standrohr 25 das mit dem Filtereinsatz 3 verbundene oder einstückige Umformelement 33 mit seinen Armen 33' in Umfangsrichtung gesehen eingriffsgerecht zur Ringfeder 23 zu führen, sind am Außenumfang des Standrohrs 25 weitere Positioniermittel 28' vorgesehen, die hier die Form von insgesamt vier symmetrisch zueinander angeordneten, jeweils paarweise schräg nach unten aufeinander zu laufenden Wendelabschnitten haben. Beim Aufsetzen des Filtereinsatzes 3 auf das Standrohr 25 können die Arme 33' des Umformelementes 33 in Umfangsrichtung gesehen in beliebiger Position auf die Positioniermittel 28' treffen, werden dann aber bei weiterer Bewegung nach unten zwangsweise in die eingriffsgerechte Stellung zu den inneren Rautenecken 23" der Ringfeder 23 geführt.

Am oberen Ende des Standrohrs 25 ist dessen Rastverbindungsmittel 29 sichtbar. Im Inneren des oberen Endbereichs des Standrohrs 25 ist der Ventilkörper 40 des Filterumgehungsventils 4 geführt. Darunter ist die Druckfeder 42 angeordnet. Da hier der Deckel des Gehäuses 10 abgenommen ist, ist die Feder 42 entspannt und übt weder auf den Ventilkörper 40 des Filterumgehungsventils 4 noch auf den Ventilkörper 20 des Ablassventils 2 eine Kraft aus.

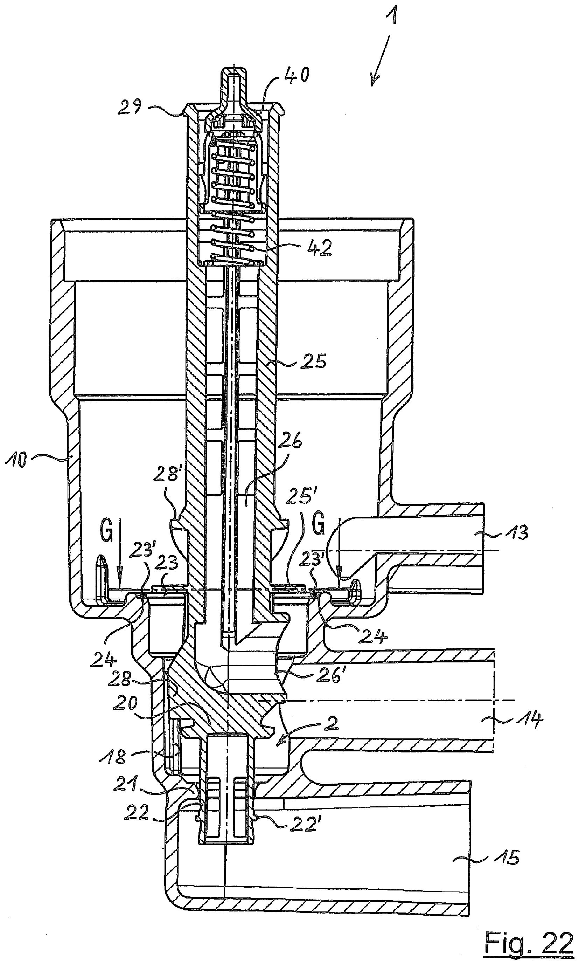

In Figur 22 ist der Flüssigkeitsfilter 1 im Zustand gemäß Figur 21, nun in einem Längsschnitt, gezeigt. Das Ablassventil 2 ist geöffnet, da der Ventilkörper 20 nun Abstand von seinem Ventilsitz 21 hat. Die Ringfeder 23 liegt mit ihren äußeren Rautenecken 23' auf der Federelementauflage 24 auf und hält so den Ventilkörper 20 mit dem Standrohr 25 in der in Figur 22 dargestellten angehobenen Stellung. Somit wird auch das Ablassventil 2 offen gehalten.

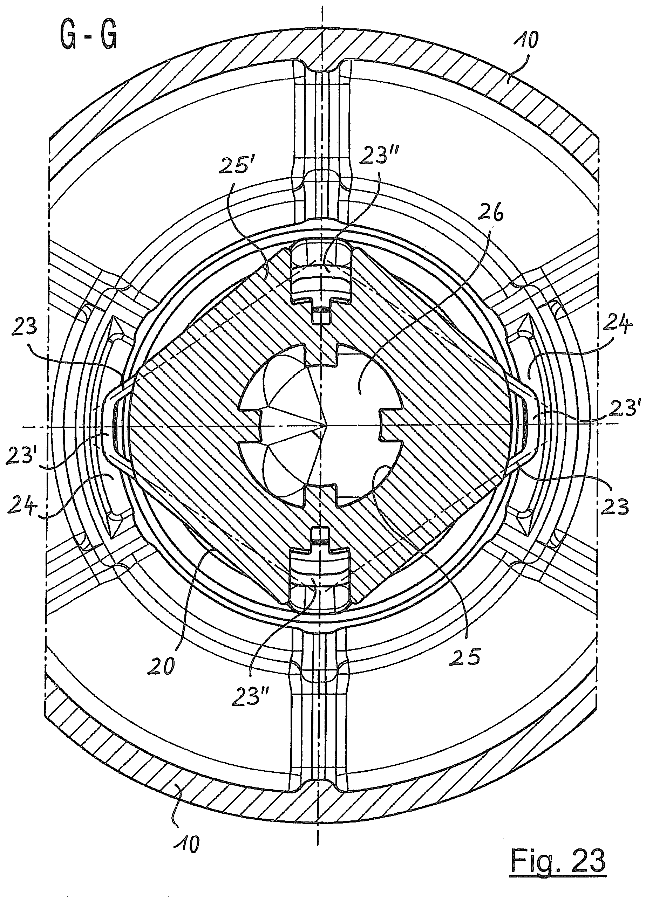

Die Figur 23 zeigt einen Schnitt gemäß der Linie G - G in Figur 22, wobei der Blick auf die Ringfeder 23 und einen diese unterstützenden und führenden Federführungskragen 25' fällt. Die Ringfeder 23 ist hier entspannt, da sie außer Eingriff mit dem Umformelement 33 steht. Hierdurch liegen die äußeren Rautenecken 23' in einer nach radial außen verschobenen Position, in der sie auf der Federelementauflage 24 aufliegen. Eine Bewegung des Ventilkörpers 20 nach unten in Schließrichtung des Ablassventils 2 ist hier unterbunden.

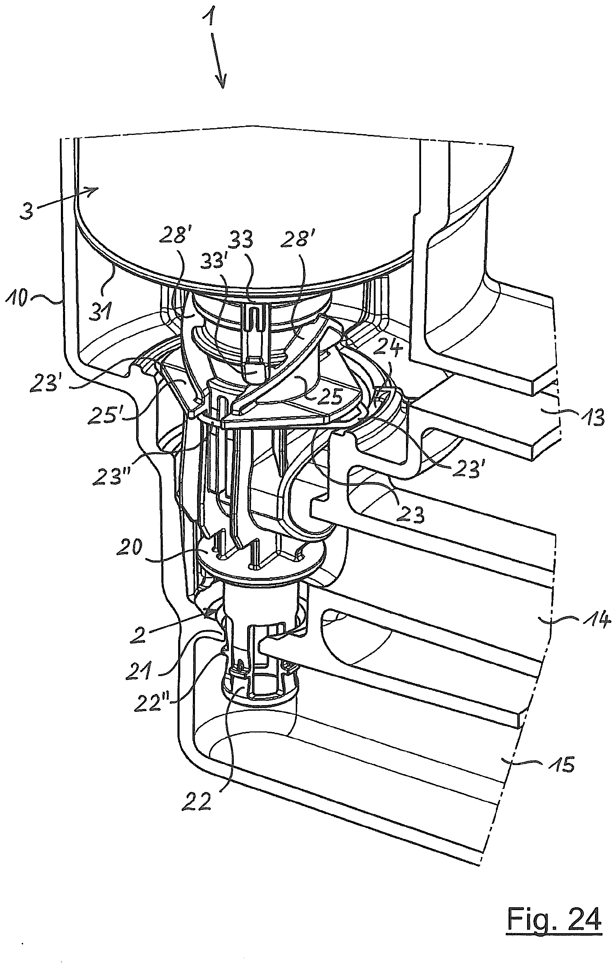

Figur 24 zeigt in einer aufgeschnittenen Ansicht den Flüssigkeitsfilter 1 während einer ersten Phase des Einsetzens eines Filterelements 3 in das Filtergehäuse 10. An der Unterseite der unteren Stirnscheibe 31 ist das Umformelement 33 mit seinen axial vorragenden Armen 33' angeordnet, welche hier schon auf die wendelförmigen Positioniermittel 28' aufgelaufen sind. Die Ringfeder 23 hat noch ihre entspannte Stellung, in der die äußeren Rautenecken 23' auf der Federelementauflage 24 aufliegen.

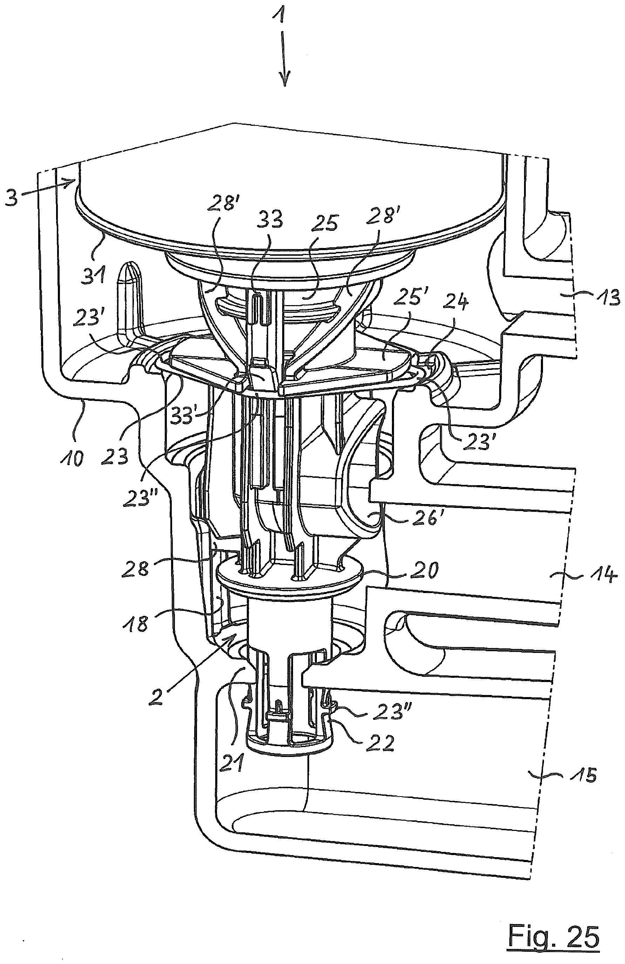

In Figur 25 ist der Filtereinsatz 3 schon weiter nach unten bewegt, wobei die Arme 33' des Umformelement 33 nun ihre eingriffsgerechte Stellung zu den inneren Rautenecken 23" der Ringfeder 23 erreicht haben, aber noch nicht in Eingriff mit der Ringfeder 23 stehen. Daher liegen die äußeren Rautenecken 23' der Ringfeder 23 nach wie vor auf der Federelementauflage 24.

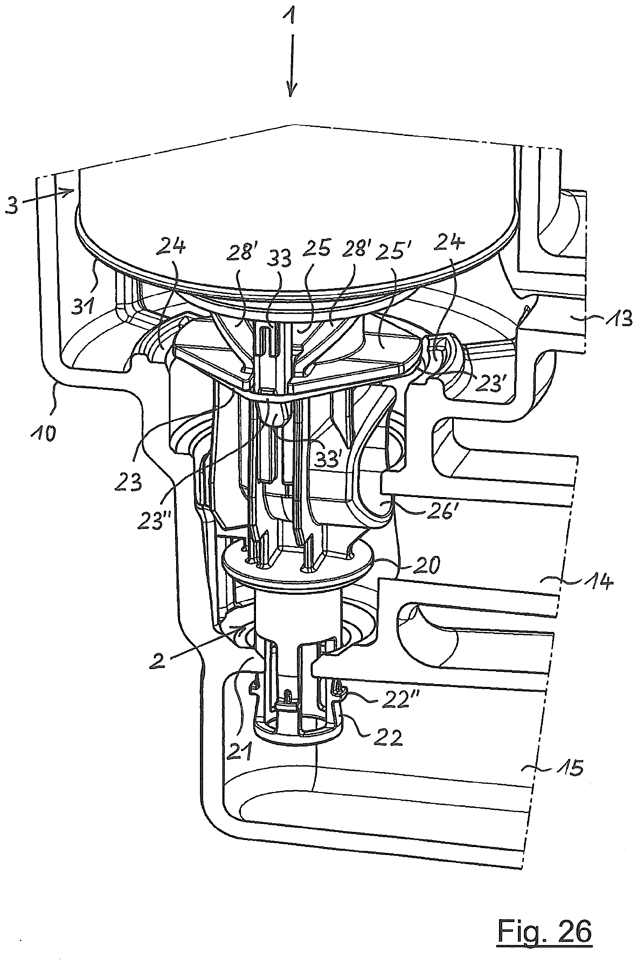

In Figur 26 sind der Filtereinsatz 3, das Umformelement 33 und dessen Arme 33' noch weiter axial nach unten bewegt, wodurch nun die Arme 33' in Eingriff mit den inneren Rautenecken 23" der Ringfeder 23 stehen. Hierdurch wird die Ringfeder 23 an ihren Rautenecken 23" aufgeweitet, was dazu führt, dass der Abstand der beiden anderen Rautenecken 23' der Ringfeder 23 sich so weit verkleinert, dass die äußeren Rautenecken 23' nicht mehr auf der Federelementauflage 24 aufliegen. Durch diese Umformung der Ringfeder 23 wird deren Haltefunktion für den Ventilkörper 20 aufgehoben und der Ventilkörper 20 kann nun zusammen mit dem Filtereinsatz 3 und gegebenenfalls dem oberseitigen Deckel noch weiter nach unten verschoben werden, bis der Ventilkörper 20 in dichtender Anlage an seinem Ventilsitz 21 steht. In dieser Stellung ist das Ablassventil 2 wieder geschlossen und die Mündung 26' liegt der wieder in vollständiger Überdeckung mit dem Reinflüssigkeitsablauf 14.

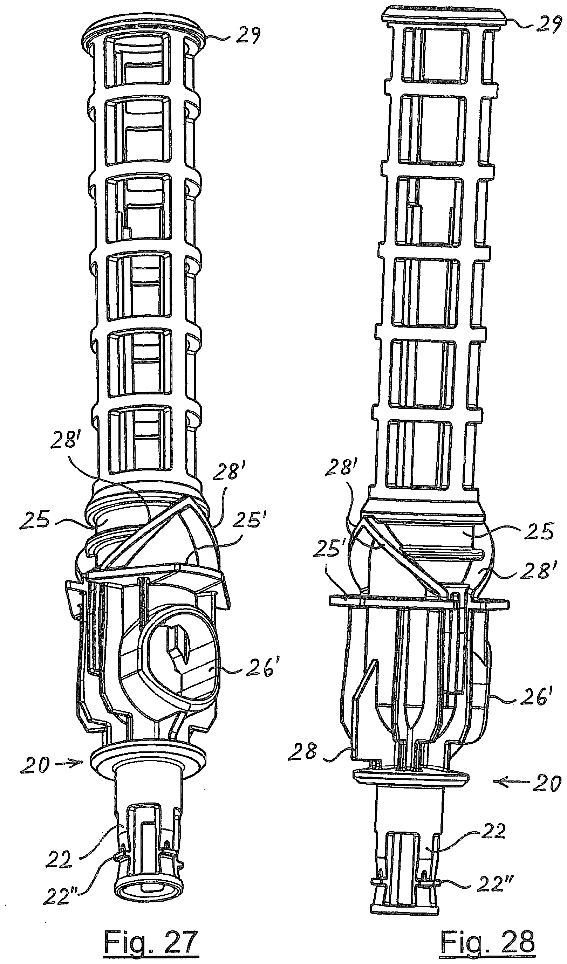

In den Figuren 27 und 28 ist der Ventilkörper 20 des zuletzt beschriebenen Beispiels des Flüssigkeitsfilters 1 in zwei verschiedenen Ansichten dargestellt. Von dem Ventilkörper 20 erstrecken sich nach unten die Federarme 23, die hier nur die widerhakenförmigen Vorsprünge 22" aufweisen, jedoch keine Haltenocken tragen. Deren Funktion wird hier von der zugehörigen, in den Figuren 27 und 28 noch nicht an dem Ventilkörper 20 angebrachten Ringfeder 23 übernommen. Oberhalb des Ventilkörpers 20 liegt die Mündung 26. Über dieser liegt der Federführungskragen 25', über welchem wiederum die rampenförmigen Positioniermittel 28' am Außenumfang des Standrohrs 25 angeformt sind. In Figur 28 ist auch das der Mündung 26' gegenüberliegende Positioniermittel 28 in Form der radial vorragenden Zunge sichtbar. Ganz oben am Standrohr 25 ist dessen Rastverbindungsmittel 29 sichtbar. In Übereinstimmung mit dem vorherigen Ausführungsbeispiel ist das Standrohr 25 nur in seinem unteren Bereich geschlossen, während es in seinem überwiegenden, oberen Teil gitterförmig ist, um einen widerstandsarmen Einlass von gefilterter Flüssigkeit zu erlauben. Vorteilhaft lässt sich der gesamte Ventilkörper 20 einschließlich des Standrohrs 25 mit allen weiteren daran angeformten Elementen einstückig als Spritzgussteil aus Kunststoff herstellen.

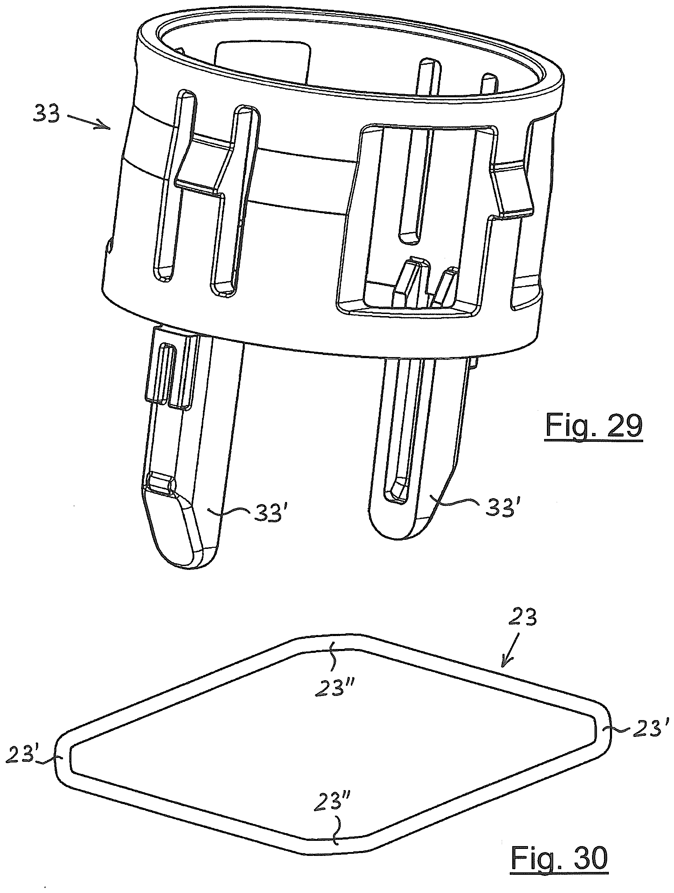

Figur 29 zeigt als Einzelteil das Umformelement 33, welches einen hohlzylindrischen, durchbrochenen und mit Rastelemente versehenen Grundkörper aufweist, der an die Unterseite des Filtereinsatzes 3 anrastbar ist. Von dem Grundkörper erstrecken sich einander in Umfangsrichtung gegenüberliegend die zwei axialen Arme 33' zur Umformung der Ringfeder 23 nach unten.

In Figur 30 ist die Ringfeder 23 in einer Draufsicht schräg von oben dargestellt, wobei hier die Rautenform der Ringfeder 23 deutlich sichtbar ist. Die Ringfeder 23 ist hier mangels Eingriffs mit dem Umformelement 33 entspannt, wodurch der Abstand zwischen den beiden äußeren Rautenecken 23' größer ist als der Abstand zwischen den beiden inneren Rautenecken 23". Diesen entspannten Zustand nimmt die Ringfeder 23 ein, wenn sie den Ventilkörper 20 mit dem Standrohr 25 in der offenen Stellung des Ablassventils 2 hält, in der die äußeren Rautenecken 23' auf der Federelementauflage 24 aufliegen.

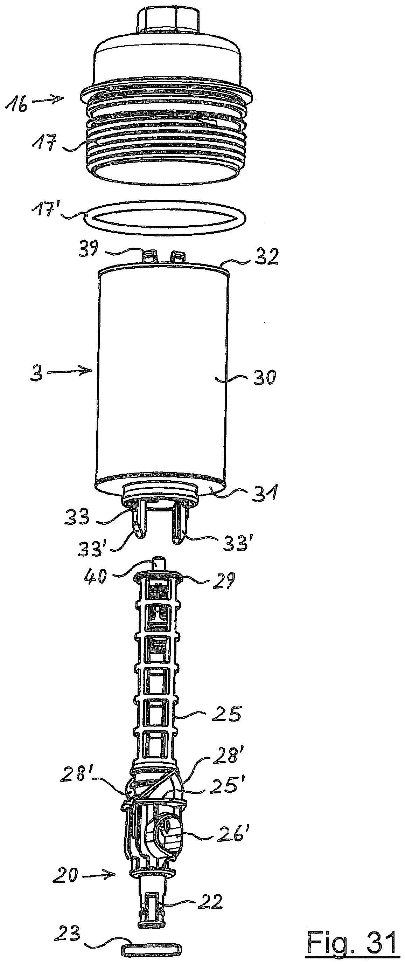

Figur 31 zeigt in gleicher Darstellungsweise wie die Figur 17 in einer Explosionsdarstellung eine vormontierbare Baueinheit. Diese Baueinheit umfasst den Deckel 16, die Dichtung 17', den Filtereinsatz 3 mit dem Umformelement 33, den Ventilkörper 20 einschließlich Standrohr 25 und die Ringfeder 23. Zur Vormontage dieser Teile zu der vormontierten Baueinheit genügt es, die Teile in Axialrichtung zusammenzufügen und zusammenzudrücken, bis die Rastverbindungsmittel zwischen den beteiligten Teilen einrasten, wobei hier nur die Rastverbindungsmittel 39 an der oberen Stirnscheibe 32 des Filtereinsatzes 3 und das Rastverbindungsmittel 29 am oberen Ende des Standrohrs 25 des Ventilkörpers 20 sichtbar sind. Die Ringfeder 23 wird klemmend am Ventilkörper 20 unmittelbar unterhalb des Federführungskragens 25' gehalten.

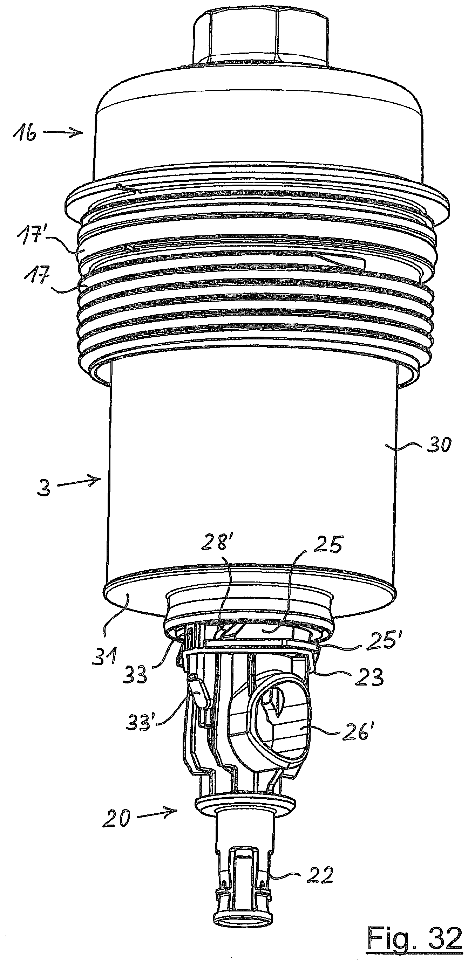

In Figur 32 ist die vormontierte Baueinheit komplett zusammengebaut, wobei nun die zuvor genannten einzelnen Bauteile miteinander lösbar verbunden sind. Diese vormontierte Baueinheit kann insgesamt mit dem Filtergehäuse 10 verbunden werden, indem die Baueinheit in Axialrichtung mit dem Ventilkörper 20 voran in das Gehäuse 10 eingeführt und dann der Deckel 16 über die Schraubverbindung 17 mit dem Filtergehäuse 10 verschraubt wird.

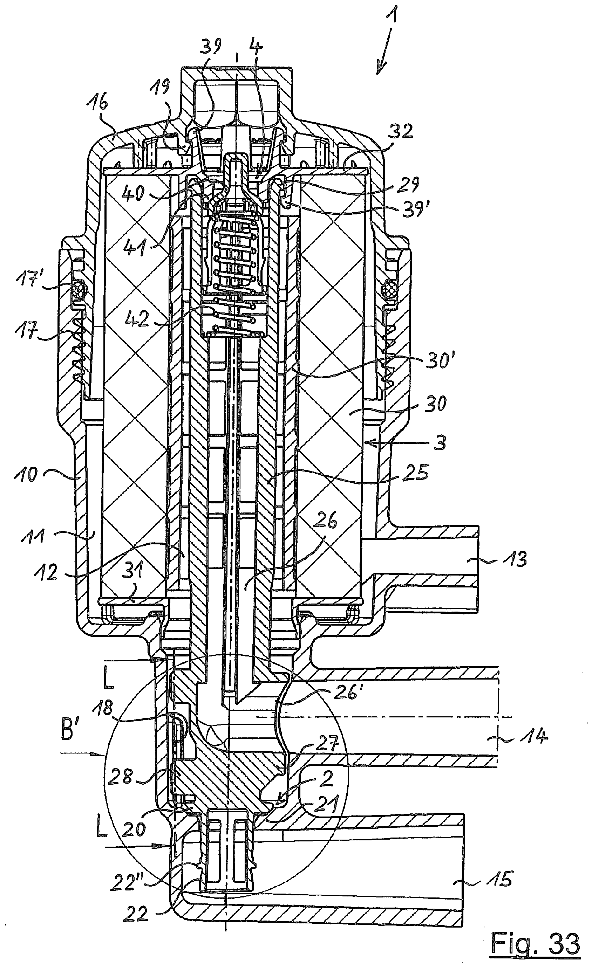

In Figur 33 ist ein drittes Ausführungsbeispiel des Flüssigkeitsfilters 1 dargestellt, welches weitestgehend mit dem ersten Ausführungsbeispiel gemäß den Figuren 1 bis 18 übereinstimmt, auf deren Beschreibung verwiesen wird.

Unterschiedlich ist bei dem Beispiel nach Figur 33, dass hier die vom Ventilkörper 20 axial nach unten verlaufenden Federarme 22 jeweils nur einen widerhakenförmigen Vorsprung 22" aufweisen nicht aber einen Haltenocken. Auch eine Ringfeder als Halteelement ist hier nicht vorgesehen. Somit wird bei diesem Beispiel des Flüssigkeitsfilters 1 bei einer Wartung mit Abnehmen des Deckels 16 und des Filtereinsatzes 3 das Ablassventil 2 nur so lange geöffnet, wie der Ventilkörper 20 über das Standrohr 27 in Rasteingriff mit dem Filtereinsatz 3 bleibt. Nach dem Anlaufen der Vorsprünge 22" gegen die Unterseite des Ventilsitzes 21 löst sich der Ventilkörper 20 vom Filtereinsatz 3 und fällt dann unter Schwerkraftwirkung nach unten. Da hier das Ablassventil 2 nicht offen gehalten wird, wenn der Filtereinsatz 3 aus dem Filtergehäuse 10 entnommen ist, eignet sich der Flüssigkeitsfilter 1 nach Figur 33 insbesondere für Flüssigkeiten mit niedriger Viskosität, die sehr schnell aus dem Filtergehäuse 10 ablaufen.

Auch bei dem Beispiel nach Figur 33 ist neben dem Ablassventil 2 wieder ein Filterumgehungsventil 4 im oberen Bereich des Standrohrs 27 vorgesehen, dessen Ausführung den zuvor schon beschriebenen Beispielen entspricht. Die Druckfeder 42 ist mit ihrem oberen Ende am Ventilkörper 40 des Filterumgehungsventils 4 und mit ihrem unteren Ende an einer Stufe in dem Standrohr 25 und somit am Ventilkörper 20 abgestützt. Damit erzeugt eine einzige, gemeinsame Druckfeder 42 die in Schließrichtung der beiden Ventile 2 und 4 wirkenden Vorbelastungskräfte, wenn der Filtereinsatz 3 eingesetzt und der Deckel 16 angebracht ist. Die Spannung der Druckfeder 42 wird erzeugt, indem der Ventilsitz 41 in der oberen Stirnscheibe 31 beim Anbringen des Deckels 16 auf den Ventilkörper 40 drückt und diesen in Axialrichtung um einen gewissen Weg nach unten verschiebt.

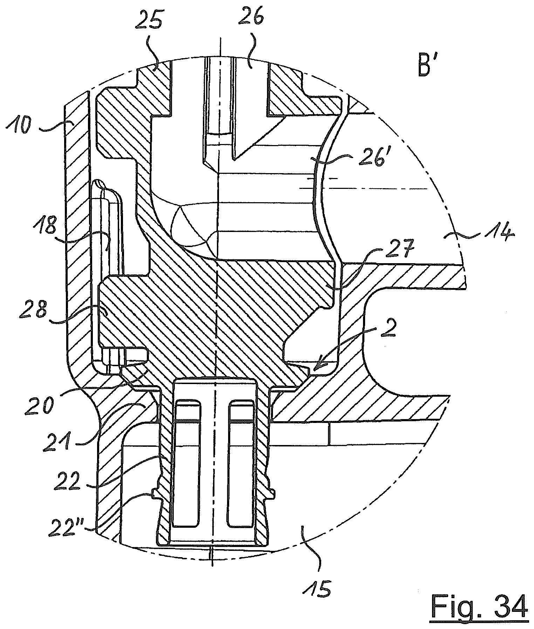

Figur 34 schließlich zeigt das in Figur 33 eingekreiste Detail B' in vergrößerter Darstellung. Der Ventilkörper 20 des Ablassventils 2 liegt in dichtender Anlage an seinem Ventilsitz 21. Dabei stehen die Positioniermittel 18 und 28 in Eingriff miteinander, um die Mündung 26' des Reinflüssigkeitskanals 26 im Standrohr 25 in exakte Überdeckung mit dem in Radialrichtung verlaufenden Reinflüssigkeitsablauf 14 zu bringen und zu halten. Die Federarme 23 mit dem jeweiligen Vorsprung 22" ragen durch den Ventilsitz 21 hindurch in den Flüssigkeitsablasskanal 15.

**Bezugszeichenliste:**

| Zeichen | Bezeichnung |
|---|---|
| 1 | Flüssigkeitsfilter |
| 10 | Filtergehäuse |
| 11 | Rohseite |
| 12 | Reinseite |
| 13 | Rohflüssigkeitszulauf |
| 14 | Reinflüssigkeitsablauf |
| 15 | Flüssigkeitsablasskanal |
| 16 | Deckel |
| 17 | Schraubverbindung zwischen 10 und 16 |
| 17' | Dichtung |
| 18 | Positioniermittel in 15 |
| 19 | Rastverbindungsmittel an 16 |
| | |
| 2 | Ablassventil |
| 20 | Ventilkörper |
| 21 | Ventilsitz/Verengung |
| 22 | Federzungen |
| 22' | Haltenocken |
| 22" | widerhakenförmiger Vorsprung |
| 23 | Ringfeder |
| 23' | äußere Rautenecken |
| 23" | innere Rautenecken |
| 24 | Federelementauflage |
| 25 | Standrohr |
| 25' | Federführungskragen |
| 26 | Reinflüssigkeitskanal in 25 |
| 26' | Mündung von 26 |
| 27 | Kragen an 20 unter 26' |
| 28, 28' | Positioniermittel an 20, an 25 |
| 29 | Rastverbindungsmittel an 20 |
| | |
| 3 | Filtereinsatz |
| 30 | Filterstoffkörper |
| 30' | Stützgitter in 30 |
| 31 | untere Stirnscheibe |
| 32 | obere Stirnscheibe |
| 33 | Umformelement |
| 33' | Arme von 33 |
| 39, 39' | Rastverbindungsmittel an 3 zu 19, zu 29 |
| | |
| 4 | Filterumgehungsventil |
| 40 | Ventilkörper von 4 |
| 41 | Ventilsitz von 4 |
| 42 | Druckfeder |

## Patentansprüche

1. Flüssigkeitsfilter (1), insbesondere Öl- oder Kraftstofffilter einer Brennkraftmaschine, mit einem im Betrieb stehend angeordneten Filtergehäuse (10) und einem darin auswechselbar untergebrachten hohlzylindrischen Filtereinsatz (3), wobei das Filtergehäuse (10) einen Rohflüssigkeitszulauf (13), einen Reinflüssigkeitsablauf (14) und einen Flüssigkeitsablasskanal (15) aufweist und im Betrieb mittels eines abnehmbaren oberseitigen Deckels (16) verschlossen ist, wobei im Ablasskanal (15) ein Ablassventil (2) angeordnet ist, dessen Ventilkörper (20) im Ablasskanal (15) axial begrenzt zwischen einer diesen verschließenden Schließstellung und einer diesen freigebenden Öffnungsstellung verschiebbar ist, wobei der Ventilkörper (20) lösbar mit dem Deckel (16) oder dem Filtereinsatz (3) verbunden ist, wobei bei an dem Filtergehäuse (10) angebrachtem Deckel (16) dieser den Ventilkörper (20) unmittelbar oder über den Filtereinsatz (3) in die den Ablasskanal (15) verschließende Schließstellung drückt und wobei bei einem Entfernen des Deckels (16) vom Filtergehäuse (10) in dessen Axialrichtung der Ventilkörper (20) vom Deckel (16) oder vom Filtereinsatz (3) zunächst in Öffnungsrichtung bis zu seiner Öffnungsstellung mitnehmbar und dann vom Deckel (16) oder Filtereinsatz (3) lösbar und mittels eines Halteelements in seiner Öffnungsstellung haltbar ist,
**dadurch gekennzeichnet,**
**dass** das Halteelement durch wenigstens ein Federelement gebildet ist, welches in Öffnungsstellung des Ventilkörpers (20) durch seine Federkraft selbsttätig ausfedert und den Ventilkörper (20) in seiner Öffnungsstellung haltend in Anlage an eine Federelementauflage (24) gelangt und welches durch Ausüben einer Kraft eingefedert und so ein Verschieben des Ventilkörpers (20) in Schließrichtung freigebend außer Eingriff mit der Federelementauflage (24) gebracht wird.

2. Flüssigkeitsfilter nach Anspruch 1, **dadurch gekennzeichnet, dass** die das Halteelement einfedernde Kraft durch Ausüben einer axialen Schubkraft auf den Filtereinsatz (3) oder auf den Ventilkörper (20) in dessen Schließrichtung erzeugbar ist.

3. Flüssigkeitsfilter nach Anspruch 1 oder 2, **dadurch gekennzeichnet, dass** das Federelement Teil des Ventilkörpers (20) oder mit diesem verbunden ist und dass die Federelementauflage (24) als Teil des Filtergehäuses (10) oder als mit dem Filtergehäuse (10) verbundenes Teil im Ablasskanal (15) angeordnet ist.

4. Flüssigkeitsfilter nach einem der Ansprüche 1 bis 3, **dadurch gekennzeichnet, dass** das Federelement durch ein oder mehrere in Axialrichtung des Ventilkörpers (20) von dessen unterem Ende ausgehende Federzungen (22) gebildet ist, die an ihrer Außenseite zumindest je einen Haltenocken (22') aufweisen, und dass die Federelementauflage (24) durch die Oberseite einer ringförmigen Verengung (21) des Ablasskanals (15), durch welche die Federzungen (22) verlaufen, gebildet ist.

5. Flüssigkeitsfilter nach Anspruch 4, **dadurch gekennzeichnet, dass** die ringförmige Verengung (21) des Ablasskanals (15) zugleich den Ventilsitz des Ablassventils (2) bildet.

6. Flüssigkeitsfilter nach Anspruch 4 oder 5, **dadurch gekennzeichnet, dass** die Federzungen (22) in einem axialen Abstand von den Haltenocken (22') zu ihrem freien Ende hin außenseitig je einen weiteren, widerhakenförmigen Vorsprung (22") aufweisen, wobei der axiale Bewegungsweg des Ventilkörpers (20) in Öffnungsrichtung durch Anlaufen der Vorsprünge (22") an die Unterseite der ringförmigen Verengung (21) begrenzt ist.

7. Flüssigkeitsfilter nach einem der Ansprüche 1 bis 3, **dadurch gekennzeichnet, dass** das Federelement durch eine Ringfeder (23) gebildet ist, die in einer quer zur Axialrichtung des Ventilkörpers (20) liegenden Ebene angeordnet und in dieser Ebene verformbar ist, wobei die Ringfeder (23) in Öffnungsstellung des Ventilkörpers (20) unbelastet ist und ihren größten Durchmesser aufweist und auf der Federelementauflage (24) aufliegt und wobei durch mindestens ein unmittelbar oder mittelbar mit dem Deckel (16) verbundenes, eine Kraft auf die Ringfeder (23) ausübendes Umformelement (33) die Ringfeder (23) beim Anbringen des Deckels (16) am Gehäuse (10) in ihrem Durchmesser so weit verkleinerbar ist, dass die Ringfeder (23) radial nach innen hin außer Anlage von der Federelementauflage (24) gelangt und relativ zu dieser zusammen mit dem Ventilkörper (20) im Ablasskanal (15) in Schließrichtung verschoben werden kann.

8. Flüssigkeitsfilter nach Anspruch 7, **dadurch gekennzeichnet, dass** die das Federelement bildende Ringfeder (23) in Draufsicht einen rautenförmigen Verlauf hat, wobei im entspannten Zustand die Ringfeder (23) mit zwei äußeren, einander gegenüberliegende Rautenecken (23') auf der Federelementauflage (24) aufliegt und wobei das Umformelement (33) zwei axial verlaufende Arme (33') aufweist, die beim Anbringen des Deckels (16) am Gehäuse (10) mit den zwei anderen, inneren Rautenecken (23") von innen her nach außen hin aufweitend und dadurch die zwei äußeren Rautenecken (23') nach innen bewegend mit der Ringfeder (23) in Eingriff treten.

9. Flüssigkeitsfilter nach Anspruch 6 oder 7, **dadurch gekennzeichnet, dass** das Umformelement (33) mit dem Filtereinsatz (3) oder dem Deckel (16) einstückig oder fest verbunden ist.

10. Flüssigkeitsfilter nach Anspruch 7, 8 oder 9, **dadurch gekennzeichnet, dass** der Ventilkörper (20) ein oder mehrere in seiner Axialrichtung von seinem unteren Ende ausgehende Federzungen (22) aufweist, die außenseitig je einen widerhakenförmigen Vorsprung (22") aufweisen, wobei der axiale Bewegungsweg des Ventilkörpers (20) in Öffnungsrichtung durch Anlaufen der Vorsprünge (22") an die Unterseite einer ringförmigen Verengung (21) im Ablasskanal (15) begrenzt ist.

11. Flüssigkeitsfilter nach einem der Ansprüche 1 bis 10, **dadurch gekennzeichnet, dass** der Ventilkörper (20) in einem oberen, zum Deckel (16) hin verlaufenden Abschnitt als Standrohr (25) ausgeführt ist, auf das der Filtereinsatz (3) aufgesteckt ist, und dass das Innere des Standrohrs (25) einen zum Reinflüssigkeitsablauf (14) führenden Reinflüssigkeitskanal (26) bildet, dessen unteres Kanalende eine in Radialrichtung weisende Mündung (26') aufweist, an welche sich ein ebenfalls in Radialrichtung verlaufender Abschnitt des Reinflüssigkeitsablaufs (14) anschließt.

12. Flüssigkeitsfilter nach Anspruch 11, **dadurch gekennzeichnet, dass** am Außenumfang des Ventilkörpers (20) und am Innenumfang des Ablasskanals (15) Positioniermittel (18 und 28) angeordnet sind, welche bei einem Einführen des Ventilkörpers (20) in den Ablasskanal (15) den Ventilkörper (20) in Umfangsrichtung gesehen in eine solche bestimmte Position relativ zum Ablasskanal (15) zwangsführen, dass die Mündung (26') des Reinflüssigkeitskanals (26) in Deckung mit dem anschließenden Abschnitt des Reinflüssigkeitsablaufs (14) gelangt.

13. Flüssigkeitsfilter nach Anspruch 11 oder 12, **dadurch gekennzeichnet, dass** am Außenumfang des Ventilkörpers (20) unterhalb der Mündung (26') des Reinflüssigkeitskanals (14) ein in Öffnungsstellung des Ventilkörpers (20) den Reinflüssigkeitsablauf (14) abschirmender Kragen (27) angebracht oder angeformt ist.

14. Flüssigkeitsfilter nach einem der Ansprüche 7 bis 10 und nach einem der Ansprüche 11 bis 13, **dadurch gekennzeichnet, dass** am Außenumfang des Standrohrs (25) und am Innenumfang des Umformelementes (33) oder des Filtereinsatzes (3) Positioniermittel (28') angeordnet sind, welche bei einem Aufstecken des Filtereinsatzes (3) auf das Standrohr (25) das Umformelement (33) in Umfangsrichtung gesehen in eine solche bestimmte Position relativ zum Standrohr (25) und zur Ringfeder (23) zwangsführen, dass die Arme (33') des Umformelementes (33) in Eingriff mit den inneren Rautenecken (23") der Ringfeder (23) gelangen.

15. Flüssigkeitsfilter nach einem der Ansprüche 1 bis 14, **dadurch gekennzeichnet, dass** in diesem ein Filterumgehungsventil (4) mit einem axial verschiebbaren Ventilkörper (40) angeordnet ist, dessen Schließrichtung zum Deckel (16) hin weist, und dass zwischen dem Ventilkörper (20) des Ablassventils (2) und dem Ventilkörper (40) des Filterumgehungsventils (4) eine Druckfeder (42) angeordnet ist, die bei am Gehäuse (10) angebrachtem Deckel (16) beide Ventilkörper (20 und 40) zugleich in deren jeweiliger Schließrichtung vorbelastet.

16. Flüssigkeitsfilter nach einem der Ansprüche 11 bis 13 und nach Anspruch 15, **dadurch gekennzeichnet, dass** der Ventilkörper (40) des Filterumgehungsventils (4) in einem oberen Endbereich des Standrohrs (25) geführt ist und dass die Druckfeder (42) im Standrohr (25) angeordnet und einerseits an diesem und andererseits am Ventilkörper (40) des Filterumgehungsventils (4) abgestützt ist.

17. Flüssigkeitsfilter nach einem der Ansprüche 1 bis 16, **dadurch gekennzeichnet, dass** zwischen dem Deckel (16) und dem Filtereinsatz (3) eine erste Rastverbindung (19, 39) vorgesehen ist, dass zwischen dem Filtereinsatz (3) und dem Ventilkörper (20) des Ablassventils (2) eine zweite Rastverbindung (29, 39') vorgesehen ist und dass die Haltekraft der ersten Rastverbindung (19, 39) größer ist als die Haltekraft der zweiten Rastverbindung (29, 39').

18. Flüssigkeitsfilter nach Anspruch 17, **dadurch gekennzeichnet, dass** die beiden Rastverbindungen (19, 39; 29, 39') eine gegenseitige Verdrehung der darüber verbundenen Teile (3, 16, 20) erlaubend und zugleich ein begrenztes Drehmoment übertragend ausgebildet sind.

## Claims

1. A liquid filter (1), particularly an oil filter or fuel filter of an internal combustion engine, with a filter housing (10), which is arranged upright during operation and a hollow cylindrical filter insert (3) accommodated therein so as to be exchangeable, wherein the filter housing (10) has a raw liquid inlet (13), a clean liquid outlet (14) and a liquid drainage channel (15), and is closed during operation by means of a detachable top-side cover (16), wherein, in the drainage channel (15) a drainage valve (2) is arranged, the valve body (20) of which is axially confined in the drainage channel (15) and moveable between a closing position closing the channel and an open position clearing it, wherein the valve body (20) is detachably attached to the cover (16) or the filter insert (3) wherein, when the cover (16) is mounted on the filter housing (10), said cover presses the valve body (20) directly or via the filter insert (3) into the closing position closing the drainage channel (15) and wherein, when the cover (16) is removed from the filter housing (10) in the axial direction thereof, the valve body (20) is first able to be carried in the opening direction to its open position and then is detachable from the cover (16) or filter insert (3) and is retainable in its open position by means of a holding element,
**characterised in**
**that** the holding element is formed by at least one spring element which automatically expands into the opening position of the valve body (20) due to its spring force and comes into attachment to a spring element restraint (24) holding the valve body (20) in its open position and which by exertion of a force contracts and thus a displacement of the valve body (20) in the closing direction is brought about, releasing engagement with the spring element restraint (24).

2. A liquid filter according to claim 1, **characterised by** the fact that the force compressing the holding element can be generated by exerting an axial thrust force onto the filter insert (3) or on the valve body (20) in its closing direction.

3. A liquid filter according to claim 1 or 2, **characterized in that** the spring element is part of the valve body (20) or connected with this and that the spring element restraint (24) is arranged as part of the filter housing (10) or arranged in the drainage channel (15) as a part connected with the filter housing (10).

4. A liquid filter according to one of claims 1 to 3, **characterized in that** the spring element is formed by one or more spring tongues (22) which extend in the axial direction of the valve body (20) from the lower end thereof and each of which has on the outer side at least one holding cam (22') and that **in that** the spring element restraint (24) is formed by the upper side of an annular constriction (21) of the drainage channel (15) through which the spring tongues (22) extend.

5. A liquid filter according to claim 4, **characterized in that** the annular constriction (21) of the drainage channel (15) also forms at the same time the valve seat of the drainage valve (2).

6. A liquid filter according to claim 4 or 5, **characterized in that** at an axial distance from the holding cams (22') each of the spring tongues (22) have on their outer side a further barb-shaped projection (22") located toward their free ends, wherein the axial movement path of the valve body (20) in the opening direction is limited by the projections (22 ") abutting against the lower side of the annular constriction (21).

7. A liquid filter according to one of the claims 1 or 3, **characterized in that** the spring element is formed by an annular spring (23), which is arranged in a plane transverse to the axial direction of the valve body (20) and can be deformed in this plane, wherein in the open position of the valve body (20), the annular spring (23) is unloaded and has its largest diameter and rests on the spring element restraint (24) and wherein by at least forming element (33) directly or indirectly connected with the cover (16) and exerting a force on the annular spring (23), the diameter of the annular spring (23) can be decreased when mounting the cover (16) on the housing (10) to such an extent that the annular spring (23) becomes detached from the spring element restraint (24) in the radially inward direction and, together with the valve body (20), can be displaced in the drainage channel (15) in the closing direction relative to the spring element restraint (24).

8. A liquid filter according to claim 7, **characterized in that** when seen in plan view the spring element formed by the annular spring (23) has a rhombusshaped pattern, wherein in the relaxed state the annular spring (23) rests with two outer rhombus corners (23'), which oppose each other, on the spring element restraint (24) and wherein the forming element (33) has two axially extending arms (33') which, when mounting the cover (16) on the housing (10), engage with the annular spring (23) by expanding with the two other inner rhombus corners (23") from the inside toward the outside and thereby moving the two outer rhombus corners (23') inward.

9. A liquid filter according to claim 6 or 7, **characterized in that** the forming element (33) is connected integrally or permanently connected with the filter insert (3) or the cover (16).

10. A liquid filter according to claim 7, 8 or 9, **characterized in that** the valve body (20) has one or more spring tongues (22) which extend in the axial direction of the valve body (20) from the lower end thereof and each spring tongue (22) has one barb-shaped projection (22") on the outer side, wherein the axial movement path of the valve body (20) in the opening direction is limited by the projections (22") abutting against the lower side of an annular constriction (21) in the drainage channel (15).

11. A liquid filter according to claims 1 to 10, **characterized in that** in an upper portion extending toward the cover (16), the valve body (20) is configured as a standpipe (25) onto which the filter insert is attached (3) is attached, and wherein the interior of the standpipe (25) forms a clean liquid channel (26) which runs to the clean liquid outlet (14) and whose lower channel end has an opening (26') which faces in the radial direction and to which is connected a portion of the clean liquid outlet (14) that likewise extends in the radial direction.

12. A liquid filter according to claim 11, **characterized in that** positioning means (18 and 28) are arranged on the outer circumference of the valve body (20) and on the inner circumference of the drainage channel (15) which, when inserting the valve body (20) into the drainage channel (15), forcibly guide the valve body (20), viewed in the circumferential direction, into such a particular position relative to the drainage channel (15) that the opening (26') of the clean liquid channel (26) comes into alignment with the subsequent portion of the clean liquid outlet (14).

13. A liquid filter according to claim 11 or 12, **characterized in that** on the outer circumference of the valve body (20) below the opening (26') of the clean liquid channel (14), a collar (27) is attached or formed, which shields the clean liquid outlet (14) when the valve body (20) is in the open position.

14. A liquid filter according to one of the claims 7 to 10 and according to one of the claims 11 to 13, **characterized in that** on the outer circumference of the standpipe (25) and on the inner circumference of the forming element (33) or the filter insert (3), positioning means (28') are arranged which, when attaching the filter insert (3) onto the standpipe (25), forcibly guide the forming element (33), viewed in the circumferential direction, in such a position relative to the standpipe (25) and to the annular spring (23) that the arms (33') of the forming element (33) engage with the inner rhombus corners (23") of the annular spring (23).

15. A liquid filter according to one of the claims 1 to 14, wherein a filter bypass valve (4) is arranged which has an axially displaceable valve body (40), the closing direction of which points toward the cover (16), and wherein a compression spring (42) is arranged between the valve body (20) of the drainage valve (2) and the valve body (40) of the filter bypass valve (4), said compression spring (42) preloads both valve bodies (20 and 40) at the same time in their respective closing direction when the cover (16) is mounted on the filter housing (10).

16. A liquid filter according to one of the claims 11 to 13 and according to claim 15, **characterized in that** valve body (40) of the filter bypass valve (4) is guided in an upper end region of the standpipe (25) and that the compression spring (42) is arranged in the standpipe (25) and is supported on one side on the standpipe (25) and on the other side the compression spring (42) is supported on the valve body (40) of the filter bypass valve (4).

17. A liquid filter according to one of the claims 1 to 16, **characterized in that** a first latching connection (19, 39) is provided between the cover (16) and the filter insert (3) and that a second latching connection (29, 39') is provided between the filter insert (3) and the valve body (20) of the drainage valve (2) and that the holding force of the first latching connection (19, 39) is greater than the holding force of the second latching connection (29, 39').

18. A liquid filter according to claim 17, **characterized in that** the two latching connections (19, 39; 29) are designed to allow mutual rotation of the parts (3, 16, 20) connected via said latching connections and to transmit a limited torque at the same time.

## Revendications

1. Filtre à liquide (1), notamment filtre à huile ou carburant d'un moteur à combustion interne, avec un boîtier de filtre (10) disposé à la verticale lors du fonctionnement et avec un élément filtrant (3) cylindrique creux installé de manière interchangeable dans celui-ci, le boîtier de filtre (10) comprenant une entrée de liquide brut (13), une sortie de liquide purifié (14) et un canal d'évacuation de liquide (15) et étant fermé durant le fonctionnement au moyen d'un couvercle (16) amovible sur le côté supérieur, une soupape d'évacuation (2) étant disposée dans le canal d'évacuation (15), dont le corps de soupape (20) est déplaçable axialement de façon limitée dans le canal d'évacuation (15), entre une position de fermeture qui le ferme et une position d'ouverture qui le libère, le corps de soupape (20) étant connecté de manière amovible avec le couvercle (16) ou l'élément filtrant (3), le couvercle (16), lorsqu'il est monté sur le boîtier de filtre (10), poussant le corps de soupape directement ou à travers l'élément filtrant (3) dans la position de fermeture du canal d'évacuation (15) et le corps de soupape (20) pouvant être, lors de l'enlèvement du couvercle (16) du boîtier de filtre (10) dans la direction axiale de celui-ci, d'abord entraîné par le couvercle (16) ou par l'élément filtrant (3) dans la direction d'ouverture jusqu'à sa position d'ouverture puis séparé du couvercle (16) ou de l'élément filtrant (3) et maintenu au moyen d'un élément de retenue dans sa position d'ouverture,
**caractérisé en ce que**
l'élément de retenue est constitué par au moins un élément de ressort, lequel, dans la position d'ouverture du corps de soupape (20), se déploie automatiquement sous sa force de ressort et vient en butée contre une surface d'appui d'élément de ressort (24), maintenant ainsi le corps de soupape (20) dans sa position d'ouverture, et lequel est comprimé sous l'effet d'une force et séparé de la surface d'appui d'élément de ressort (24), permettant ainsi un déplacement du corps de soupape (20) dans la direction de fermeture.

2. Filtre à liquides selon la revendication 1, **caractérisé en ce que** la force comprimant l'élément de retenue peut être générée par l'exercice d'une force de pousse axiale sur l'élément filtrant (3) ou sur le corps de soupape (20) dans sa direction de fermeture.

3. Filtre à liquides selon la revendication 1 ou 2, **caractérisé en ce que** l'élément de ressort fait partie du corps de soupape (20) ou est connecté avec celui-ci et que la surface d'appui d'élément de ressort (24) est disposée dans le canal d'évacuation (15) sous la forme d'une partie du boîtier de filtre (10) ou sous la forme d'une partie connectée au boîtier de filtre (10)

4. Filtre à liquides selon l'une quelconque des revendications 1 à 3, **caractérisé en ce que** l'élément de ressort est composé d'une ou plusieurs languettes élastiques (22), qui présentent chacune sur sa face extérieur au moins une came de maintient (22'), sortant de l'extrémité inférieure du corps de soupape (20) dans sa direction axiale, et que la surface d'appui d'élément de ressort (24) est formée par la face supérieure d'un rétrécissement circulaire (21) du canal d'évacuation (15), à travers lequel passent les languettes élastiques (22).

5. Filtre à liquides selon la revendication 4, **caractérisé en ce que** le rétrécissement circulaire (21) du canal d'évacuation (15) forme en même temps le siège de soupape de la soupape d'évacuation (2).

6. Filtre à liquides selon la revendication 4 ou 5, **caractérisé en ce que** les languettes élastiques (22) présentent chacune à une distance axiale des cames de maintient (22'), vers leur extrémité libre, une autre saillie en forme de crochet de retenue (22"), le trajet de déplacement axial du corps de soupape (20) étant limité dans la direction d'ouverture par le contact des saillies (22") avec la face inférieure du rétrécissement circulaire (21).

7. Filtre à liquides selon l'une quelconque des revendications 1 à 3, **caractérisé en ce que** l'élément de ressort est constitué d'un ressort annulaire (23) qui est disposé dans un plan s'étendant transversalement à la direction axiale du corps de soupape (20) et peut être déformé dans ce plan, le ressort annulaire (23) étant non chargé dans la position d'ouverture du corps de soupape (20) et présentant son plus grand diamètre et étant en appui sur la surface d'appui d'élément de ressort (24), et le ressort annulaire (23) pouvant être tant réduit en diamètre par au moins un élément de déformation (33), connecté directement ou indirectement au couvercle (16) et exerçant une force sur le ressort annulaire (23), lors du positionnement du couvercle (16) sur le boîtier (10), que le ressort annulaire (23) est séparé radialement vers l'intérieur de la surface d'appui d'élément de ressort (24) et peut être déplacé par rapport à celle-ci avec le corps de soupape (20) en direction de fermeture dans le canal d'évacuation (15).

8. Filtre à liquides selon la revendication 7, **caractérisé en ce que** le ressort annulaire (23) formant l'élément de ressort a, en vue de dessus, une courbe en forme de losange, le ressort annulaire (23) étant, en état relâché, en appui sur la surface d'appui d'élément de ressort (24) par deux coins de losange (23') opposés l'un à l'autre, et l'élément de déformation (33) présentant deux bras (33') s'étendant axialement qui lors du positionnement du couvercle (16) sur le boîtier (10), venant en prise avec le ressort annulaire (23), avec les deux autres coins de losange intérieurs (23"), les évasant de l'intérieur vers l'extérieur et déplaçant ainsi les deux coins de losange extérieurs (23') vers l'intérieur.

9. Filtre à liquides selon la revendication 6 ou 7, **caractérisé en ce que** l'élément de déformation (33) est connecté d'une seule pièce ou de manière fixe à l'élément filtrant (3) ou au couvercle (16).

10. Filtre à liquides selon la revendication 7, 8 ou 9, **caractérisé en ce que** le corps de soupape (20) présente une ou plusieurs languettes élastiques (22) s'étendant dans sa direction axiale à partir de son extrémité inférieure, lesquelles présentent chacune une saillie en forme de crochet de retenue (22"), le trajet de déplacement axial du corps de soupape (20) étant limité dans la direction d'ouverture par le contact des saillies (22") avec la face inférieure du rétrécissement circulaire (21) dans le canal d'évacuation (15).

11. Filtre à liquides selon l'une quelconque des revendications 1 à 10, **caractérisé en ce que** le corps de soupape (20) est réalisé dans une section supérieure se dirigeant vers le couvercle (16) sous la forme d'un tube vertical (25), sur lequel l'élément filtrant (3) est fixé, et que l'intérieur du tube vertical (25) forme un canal pour liquide purifié (26) menant à la sortie de liquide purifié (14), dont l'extrémité inférieure de canal présente une embouchure (26') orientée radialement, laquelle se raccorde à une section de la sortie de liquide purifié (14) orientée aussi radialement.

12. Filtre à liquides selon la revendication 11, **caractérisé en ce que** des moyens de positionnement (18 et 28) sont disposés le long de la circonférence extérieure du corps de soupape (20) et le long de la circonférence intérieure du canal d'évacuation (15), qui, lors de l'introduction du corps de soupape (20) dans le canal d'évacuation (15), forcent le corps de soupape (20), dans la direction circonférentielle, dans une telle position déterminée par rapport au canal d'évacuation (15) que l'embouchure (26') du canal de liquide purifié (26) entre en alignement avec la section de raccord de la sortie de liquide purifié (14).

13. Filtre à liquides selon la revendication 11 ou 12, **caractérisé en ce que** qu'un col (27) protégeant la sortie de liquide purifié (14) dans la position d'ouverture du corps de soupape (20) est placé ou formé sur la circonférence extérieure du corps de soupape (20) en dessous de l'embouchure (26') du canal de liquide purifié (14).

14. Filtre à liquides selon l'une quelconque des revendications 7 à 10 et selon l'une quelconque des revendications 11 à 13, **caractérisé en ce que** des moyens de positionnement (28') sont disposés le long de la circonférence extérieure du tube vertical (25) et le long de la circonférence intérieure de l'élément de déformation (33) ou de l'élément filtrant (3), lesquels, lors de la fixation de l'élément filtrant (3) sur le tube vertical (25), forcent l'élément de déformation (33), dans la direction circonférentielle, dans une telle position déterminée par rapport au tube vertical (25) et au ressort annulaire (23) que les bras (33') de l'élément de déformation (33) entrent en prise avec les coins de losange intérieures (23") du ressort annulaire (23).

15. Filtre à liquides selon l'une quelconque des revendications 1 à 14, **caractérisé en ce qu'**une soupape de contournement de filtre (4) avec un corps de soupape (40) déplaçable en direction axiale, dont la direction de fermeture est orientée vers le couvercle (16), y est disposée et qu'un un ressort de pression (42) est disposé entre le corps de soupape (20) de la soupape d'évacuation (2) et le corps de soupape (40) de la soupape de contournement de filtre (4), lequel pré-charge les deux corps de soupape (20 et 40) dans leur direction de fermeture respective lorsque le couvercle (16) est placé sur le boîtier (10).

16. Filtre à liquides selon l'une quelconque des revendications 11 à 13 et selon la revendication 15, **caractérisé en ce que** le corps de soupape (40) de la soupape de contournement de filtre (4) est placé dans une partie d'extrémité supérieure du tube vertical (25) et que le ressort de pression (42) est disposé dans le tube vertical (25) et est supporté d'un côté par celui-ci et d'un autre côté par la soupape (40) de contournement de filtre (4).

17. Filtre à liquides selon l'une quelconque des revendications 1 à 16, **caractérisé en ce qu'**une première liaison d'encliquetage (19, 39) est prévue entre le couvercle (16) et l'élément filtrant (3), qu'une seconde liaison d'encliquetage (29, 39') est prévue entre l'élément filtrant (3) et le corps de soupape (20) de la soupape d'évacuation (2) et que la force de retenue de la première liaison d'encliquetage (19, 39) est supérieure à la force de retenue de la seconde liaison d'encliquetage (29, 39').

18. Filtre à liquides selon la revendication 17, **caractérisé en ce que** les deux liaisons d'encliquetage (19, 39, 29) permettent une rotation réciproque des pièces (3, 16, 20) qu'elles connectent et sont en même temps formée de manière à transmettre un couple limité.
